# EUROPEAN PATENT APPLICATION

(11) **EP 4 593 268 A1**
(43) Date of publication of application: **30.07.2025**
(21) Application number: 23896765.7
(22) Date of filing: 28.11.2023
(51) Int. Cl.: H02K 33/00, G03B 5/00

(54) **VOICE COIL MOTOR, OPTICAL IMAGE STABILIZATION COMPONENT, CAMERA MODULE, AND ELECTRONIC DEVICE**

(30) Priority: 02.12.2022 CN 202211541415
(71) Applicant: Huawei Technologies Co., Ltd., Shenzhen, Guangdong 518129 (CN)
(72) Inventor: LU, Lei, Shenzhen, Guangdong 518129 (CN); KUO, Li-Te, Shenzhen, Guangdong 518129 (CN); FU, Qianyan, Shenzhen, Guangdong 518129 (CN); DING, Ruiming, Shenzhen, Guangdong 518129 (CN); LI, Zhangcheng, Shenzhen, Guangdong 518129 (CN)
(74) Representative: Maiwald GmbH
(86) International application number: PCT/CN2023/134614
(87) International publication number: WO 2024/114616

(57) **Abstract**

Embodiments of this application provide a voice coil motor, an optical image stabilization assembly, a compact camera module, and an electronic device. The voice coil motor includes a fastening portion, a first movable portion, a second movable portion, a first actuating portion, and a second actuating portion. The first actuating portion and the second actuating portion are respectively configured to drive the first movable portion and the second movable portion to rotate relative to the fastening portion in two mutually perpendicular directions. The first movable portion and the second movable portion limit a degree of freedom of the first movable portion through fit between an arc surface and a support groove, and/or the second movable portion and the fastening portion limit a degree of freedom of the second movable portion through fit between two fulcrum elements and two grooves. **In** the foregoing solution, a degree of freedom of the voice coil motor in an undesired motion direction can be reduced, to improve image stabilization effect of the voice coil motor, so as to improve imaging quality.

## Description

This application claims priority to Chinese Patent Application No. 202211541415.0, filed with the China National Intellectual Property Administration on December 2, 2022 and entitled "VOICE COIL MOTOR, OPTICAL IMAGE STABILIZATION ASSEMBLY, COMPACT CAMERA MODULE, AND ELECTRONIC DEVICE", which is incorporated herein by reference in its entirety.

### TECHNICAL FIELD

Embodiments of this application relate to the field of electronic device technologies, and more specifically, to a voice coil motor, an optical image stabilization assembly, a compact camera module, and an electronic device.

### BACKGROUND

With continuous development of electronic device technologies, an image shooting function has become an important feature of an electronic device (for example, a mobile phone or a tablet computer) and a main indicator for evaluating performance of the electronic device. Optical zoom with a high zoom ratio is always a development trend of image shooting of the electronic device. However, due to a trend of lightness and thinness of the electronic device, a structure of a conventional compact camera module cannot meet a requirement of the optical zoom with a high zoom ratio. Therefore, a periscope compact camera module emerges.

An existing periscope compact camera module usually has an optical image stabilization (optical image stabilization, OIS) function, to improve image shooting quality. During optical image stabilization, the periscope compact camera module usually uses a voice coil motor to drive an optical folding element to rotate, to perform shake compensation.

However, in the existing periscope compact camera module, due to a limitation of a structure design of the voice coil motor, when the voice coil motor drives the optical folding element to perform shake compensation, the voice coil motor may be interfered with by a degree of freedom in an undesired motion direction. Consequently, image stabilization effect of the voice coil motor is poor, and image stabilization quality is affected. As a result, image shooting quality is not satisfactory.

### SUMMARY

Embodiments of this application provide a voice coil motor, an optical image stabilization assembly, a compact camera module, and an electronic device, to improve image stabilization effect of the voice coil motor, so as to improve imaging quality.

According to a first aspect, a voice coil motor is provided, including a fastening portion; a first movable portion, configured to fasten to an optical element, where the optical element is configured to adjust light incident in a first direction to be transmitted in a second direction, and the second direction is perpendicular to the first direction; a first actuating portion, configured to drive the first movable portion to rotate around a third direction relative to the fastening portion, where the third direction is perpendicular to the first direction and perpendicular to the second direction; a second movable portion, connected to the first movable portion through a first elastic member, where the second movable portion is configured to support the first movable portion; and a second actuating portion, configured to drive the second movable portion to rotate around the first direction relative to the fastening portion, where
bearing tables are disposed on the second movable portion, the bearing table includes a support groove, a first fulcrum element is disposed on the first movable portion, the first fulcrum element includes a first arc surface, and the first movable portion is borne on an inner wall of the support groove through the first arc surface; the first elastic member includes a first connection portion, a second connection portion, and a deformation portion located between the first connection portion and the second connection portion, the first connection portion is fastened to the first fulcrum element, and the second connection portion is fastened to the bearing table; and when the first actuating portion drives the first movable portion, the first arc surface rotates around the third direction in the support groove, to limit a deformation direction of the deformation portion.

In this embodiment of this application, the first movable portion is borne on the support groove of the second movable portion through the first arc surface. When the first actuating portion drives the first movable portion, the first fulcrum element rotates in the support groove. In this way, when the first elastic member is elastically deformed, the first elastic member is deformed in a relatively fixed direction, instead of being deformed in any direction without a constraint. This can reduce or avoid movement or rotation of the voice coil motor in an undesired motion direction, so that image stabilization effect of the motor is improved, and imaging quality is improved.

In a possible implementation, a rotation center and a center of mass of the first movable portion and the optical element in a connected state coincide.

In this way, impact of an interference torque can be reduced, to improve an anti-interference capability of the motor.

In a possible implementation, the support groove is a V-shaped groove or an arc-shaped groove.

The V-shaped groove or the arc-shaped groove can increase a contact area between the first fulcrum element and the inner wall of the groove, to reduce a reliability risk.

In a possible implementation, there is a first preset distance in the first direction between a surface that is of the first fulcrum element and that is fastened to the first connection portion and a surface that is of the bearing table and that is fastened to the second connection portion, and the first preset distance is used by the first elastic member to apply a first pre-pressure to the first fulcrum element.

The first pre-pressure is applied by the first elastic member to the first fulcrum element, so that the first fulcrum element is always borne on the inner wall of the support groove, and movement of the optical element in the first direction can be limited. In addition, the first pre-pressure is applied, so that a friction between the first arc surface and the inner wall of the support groove can be increased, and movement of the optical element in the second direction can be limited. In addition, due to the first pre-pressure, a location difference of the first movable portion in different postures of a compact camera module can be reduced, to reduce a sensitivity difference in different postures, so as to improve image stabilization effect.

In a possible implementation, a first through hole is provided on the first connection portion, a first locating pin is disposed on the surface that is of the first fulcrum element and that is fastened to the first connection portion, and the first elastic member is sleeved on the first locating pin through the first through hole; and a second through hole is provided on the second connection portion, a second locating pin is disposed on the surface that is of the bearing table and that is fastened to the second connection portion, and the first elastic member is sleeved on the second locating pin through the second through hole.

A relative location relationship between the first movable portion and the second movable portion may be positioned through fit between the through hole and the locating pin.

In a possible implementation, a table surface of the bearing table includes a first section surface, a second section surface, a third section surface, a fourth section surface, and a fifth section surface that are sequentially connected in the second direction; the first section surface and the fifth section surface are located on a first plane perpendicular to the first direction, and the first section surface and the fifth section surface are used to fasten to the first connection portion; the second section surface and the fourth section surface are located on a second plane perpendicular to the first direction, the second plane is lower than the first plane in the first direction, and a distance between the second section surface and the first plane and a distance between the fourth section surface and the first plane are used to provide deformation space for the deformation portion; and the third section surface is recessed toward a side that is of the second plane and that is away from the first plane, to form the support groove.

In this way, the first section surface and the fifth section surface may be prepared in a same process, and the second section surface and the fourth section surface may be prepared in a same process, so that a manufacturing process of the second movable portion can be simplified.

In a possible implementation, the voice coil motor includes two first fulcrum elements; the first movable portion includes a first side wall and a second side wall that are disposed opposite to each other in the third direction, the second movable portion includes a first support portion and a second support portion that are disposed opposite to each other in the third direction, the first support portion is located on a side that is of the first side wall and that is away from the second side wall, and the second support portion is located on a side that is of the second side wall and that is away from the first side wall; one of the two first fulcrum elements is disposed on a side that is of the first side wall and that faces the first support portion, the bearing table is disposed on a side that is of the first support portion and that faces the first side wall, and the first fulcrum element on the first side wall is borne by the bearing table on the first support portion; and the other of the two first fulcrum elements is disposed on a side that is of the second side wall and that faces the second support portion, the bearing table is disposed on a side that is of the second support portion and that faces the second side wall, and the first fulcrum element on the second side wall is borne by the bearing table on the second support portion.

In this way, in the second direction, the first movable portion is borne on the second movable portion through the two first fulcrum elements, so that stability of driving the first movable portion by the first actuating portion can be ensured.

In a possible implementation, the first fulcrum element is a D-shaped shaft.

In a possible implementation, the first fulcrum element and the first movable portion are integrally formed.

In a possible implementation, one of the second movable portion and the fastening portion is a first component, and the other of the second movable portion and the fastening portion is a second component; a second fulcrum element and a third fulcrum element that are arranged in the first direction are disposed on the first component, the second fulcrum element and the third fulcrum element are fastened to the second component, the second fulcrum element includes a second arc surface, and the third fulcrum element includes a third arc surface; a second groove and a third groove that are arranged in the first direction are provided on the second component, the second groove is used to accommodate at least a part of the second fulcrum element, an inner wall of the second groove is in contact with the second arc surface, the third groove is used to accommodate at least a part of the third fulcrum element, and an inner wall of the third groove is in contact with the third arc surface; and when the second actuating portion drives the second movable portion to rotate around the first direction, the second arc surface is borne by the inner wall of the second groove, and the third arc surface is borne by the inner wall of the third groove, to limit rotation of the second movable portion around the second direction.

The second movable portion has two fulcrums in the first direction, and the second groove and the third groove can limit the second fulcrum element and the third fulcrum element in the third direction, so that stability of rotation of the motor around the first direction can be improved, and rotation of the optical element around the second direction can be reduced or avoided, to reduce a degree of freedom of the voice coil motor in an undesired motion direction.

In a possible implementation, a connection line between a rotation center of the second arc surface and a rotation center of the third arc surface is parallel to the first direction.

In a possible implementation, the second fulcrum element and the third fulcrum element are balls; or the second fulcrum element and the third fulcrum element are protrusions that are of the first component and that extend towards the second component.

In a possible implementation, the second groove is a taper groove or a V-shaped groove; and/or the third groove is a taper groove or a V-shaped groove.

When the second groove and/or the third groove are/is a taper groove, a relative location relationship between the second movable portion and the fastening portion can be limited, and movement of the optical element in the first direction and movement of the optical element in the third direction can be reduced or avoided, to reduce the degree of freedom of the optical element in the undesired motion direction.

When the second groove and/or the third groove are/is a V-shaped groove, two side surfaces of the V-shaped groove may be in contact with the fulcrum element, and rotation of the second movable portion around the second direction may be suppressed in a process in which the second movable portion rotates around the first direction. In addition, the V-shaped groove can absorb an installation error and reduce assembly difficulty.

In a possible implementation, when the second groove and/or the third groove are/is a V-shaped groove, an extension direction of the V-shaped groove is parallel to the first direction.

In a possible implementation, when the second groove and/or the third groove are/is a taper groove, the taper groove is used to limit movement of the second movable component in the first direction.

In a possible implementation, the voice coil motor further includes a second elastic member, the second elastic member includes a third connection portion, a fourth connection portion, and a cantilever located between the third connection portion and the fourth connection portion, the third connection portion is fastened to the fastening portion, and the fourth connection portion is fastened to the second movable portion.

The fastening portion is connected to the second movable portion through the second elastic member, so that the second movable portion can be allowed to rotate relative to the fastening portion.

In a possible implementation, there is a second preset distance in the second direction between a surface that is of the fastening portion and that is fastened to the third connection portion and a surface that is of the second movable portion and that is fastened to the fourth connection portion, and the second preset distance is used by the second elastic member to apply a second pre-pressure to the second fulcrum element and the third fulcrum element.

The second preset distance is set, so that the second elastic member can apply a pre-pressure to the second fulcrum element and the third fulcrum element, to maintain stability of movable connection between the second movable portion and the fastening portion.

In a possible implementation, the voice coil motor includes two second elastic elements; the second movable portion includes the first support portion and the second support portion that are disposed opposite to each other in the third direction, and a third support portion configured to connect the first support portion and the second support portion, and the third support portion is perpendicular to the second direction; the fastening portion includes a fourth side wall and a fifth side wall that are disposed opposite to each other in the third direction, and a third side wall configured to connect the fourth side wall and the fifth side wall, the third side wall is perpendicular to the second direction, the fourth side wall is located on a side that is of the second support portion and that is away from the first support portion, and the fifth side wall is located on a side that is of the first support portion and that is away from the second support portion; and an end face that is of the fourth side wall and that is away from the third side wall in the second direction is connected to an end face that is of the second support portion and that is away from the third support portion in the second direction through one of the two second elastic elements, and an end face that is of the fifth side wall and that is away from the third side wall in the second direction is connected to an end face that is of the first support portion and that is away from the third support portion in the second direction through the other of the two second elastic elements.

In this way, in the third direction, the second movable portion is connected to the fastening portion through the two second elastic elements, so that stability of driving the second movable portion by the second actuating portion can be ensured.

In a possible implementation, a first groove located between the second groove and the third groove is provided on the second component, and the first groove is used to accommodate a magnetic element; and a magnetic conductive member located between the second fulcrum element and the third fulcrum element is disposed on the first component, and a magnetic force between the magnetic conductive member and the magnetic element is used to apply a third pre-pressure to the second fulcrum element and the third fulcrum element.

When a magnetic attraction manner is used, and the second elastic member is used to apply a pre-pressure to the second fulcrum element and the third fulcrum element, a pre-pressing state between the fastening portion and the second movable portion is adjustable.

According to a second aspect, a voice coil motor is provided, including a fastening portion; a movable portion, configured to fasten to an optical element, where the optical element is configured to adjust light incident in a first direction to be transmitted in a second direction, and the second direction is perpendicular to the first direction; and an actuating portion, configured to drive the movable portion to rotate around the first direction relative to the fastening portion, where
one of the movable portion and the fastening portion is a first component, and the other of the movable portion and the fastening portion is a second component; a second fulcrum element and a third fulcrum element that are arranged in the first direction are disposed on the first component, the second fulcrum element and the third fulcrum element are fastened to the second component, the second fulcrum element includes a second arc surface, and the third fulcrum element includes a third arc surface; a second groove and a third groove that are arranged in the first direction are provided on the second component, the second groove is used to accommodate at least a part of the second fulcrum element, an inner wall of the second groove is in contact with the second arc surface, the third groove is used to accommodate at least a part of the third fulcrum element, and an inner wall of the third groove is in contact with the third arc surface; and when the actuating portion drives the movable portion to rotate around the first direction, the second arc surface is borne by the inner wall of the second groove, and the third arc surface is borne by the inner wall of the third groove, to limit rotation of the movable portion around the second direction.

In this embodiment of this application, the second movable portion has two fulcrums in the first direction, and the second groove and the third groove can limit the second fulcrum element and the third fulcrum element in the third direction, so that stability of rotation of the motor around the first direction can be improved, and rotation of the optical element around the second direction can be reduced or avoided, to reduce a degree of freedom of the voice coil motor in an undesired motion direction, so as to improve image stabilization effect of the motor, and improve imaging quality.

In a possible implementation, a connection line between a rotation center of the second arc surface and a rotation center of the third arc surface is parallel to the first direction.

In a possible implementation, the second fulcrum element and the third fulcrum element are balls; or the second fulcrum element and the third fulcrum element are protrusions that are of the first component and that extend towards the second component.

In a possible implementation, the second groove is a taper groove or a V-shaped groove; and/or the third groove is a taper groove or a V-shaped groove.

In a possible implementation, when the second groove and/or the third groove are/is a V-shaped groove, an extension direction of the V-shaped groove is parallel to the first direction.

In a possible implementation, when the second groove and/or the third groove are/is a taper groove, the taper groove is used to limit movement of the movable component in the first direction.

In a possible implementation, the voice coil motor further includes an elastic member, the elastic member includes a third connection portion, a fourth connection portion, and a cantilever located between the third connection portion and the fourth connection portion, the third connection portion is fastened to the fastening portion, and the fourth connection portion is fastened to the movable portion.

In a possible implementation, there is a second preset distance in the second direction between a surface that is of the fastening portion and that is fastened to the third connection portion and a surface that is of the movable portion and that is fastened to the fourth connection portion, and the second preset distance is used by the elastic member to apply a second pre-pressure to the second fulcrum element and the third fulcrum element.

In a possible implementation, the voice coil motor includes two elastic elements; the movable portion includes a first support portion and a second support portion that are disposed opposite to each other in a third direction, and a third support portion configured to connect the first support portion and the second support portion, the third support portion is perpendicular to the second direction, and the third direction is perpendicular to the first direction and perpendicular to the second direction; the fastening portion includes a fourth side wall and a fifth side wall that are disposed opposite to each other in the third direction, and a third side wall configured to connect the fourth side wall and the fifth side wall, the third side wall is perpendicular to the second direction, the fourth side wall is located on a side that is of the second support portion and that is away from the first support portion, and the fifth side wall is located on a side that is of the first support portion and that is away from the second support portion; and an end face that is of the fourth side wall and that is away from the third side wall in the second direction is connected to an end face that is of the second support portion and that is away from the third support portion in the second direction through one of the two elastic elements, and an end face that is of the fifth side wall and that is away from the third side wall in the second direction is connected to an end face that is of the first support portion and that is away from the third support portion in the second direction through the other of the two elastic elements.

In a possible implementation, a first groove located between the second groove and the third groove is provided on the second component, and the first groove is used to accommodate a magnetic element; and a magnetic conductive member located between the second fulcrum element and the third fulcrum element is disposed on the first component, and a magnetic force between the magnetic conductive member and the magnetic element is used to apply a third pre-pressure to the second fulcrum element and the third fulcrum element.

According to a third aspect, an optical image stabilization assembly is provided, including an optical element and the voice coil motor according to any one of the possible implementations of the first aspect or the second aspect. The optical element is fastened to the voice coil motor, the optical element is configured to adjust light incident in a first direction to be transmitted in a second direction, and the voice coil motor is configured to drive the optical element to rotate.

According to a fourth aspect, a compact camera module is provided, including a lens group, an image sensor, and the optical image stabilization assembly in the third aspect. The lens group is configured to process light incident from the optical element and then project processed light onto the image sensor.

According to a fifth aspect, an electronic device is provided, including a gyroscope, a processing unit, and the compact camera module in the fourth aspect. The gyroscope is configured to collect shake information of the electronic device, and send the shake information to the processing unit. The processing unit is configured to control, based on the shake information, the voice coil motor to drive the optical element to perform shake compensation.

For beneficial effects of the apparatuses in the second aspect to the fifth aspect, refer to the first aspect. For brevity, details are not described again.

### BRIEF DESCRIPTION OF DRAWINGS

FIG. 1 is a diagram of a structure of an electronic device according to an embodiment of this application;
FIG. 2 is a diagram of a structure of a compact camera module according to an embodiment of this application;
FIG. 3 is a diagram of optical image stabilization of a periscope compact camera module;
FIG. 4 is an assembly diagram of an optical image stabilization assembly according to an embodiment of this application;
FIG. 5 is an exploded view of an optical image stabilization assembly according to an embodiment of this application;
FIG. 6 is an exploded view of an optical image stabilization assembly according to an embodiment of this application;
FIG. 7 is a diagram of a structure of a first movable portion according to an embodiment of this application;
FIG. 8 is a diagram of a structure of a second movable portion according to an embodiment of this application;
FIG. 9 is a diagram of a structure of a first elastic member according to an embodiment of this application;
FIG. 10 is an assembly diagram of a first elastic member and a first movable portion according to an embodiment of this application;
FIG. 11 is a schematic cross-sectional view of a first elastic member, a first movable portion, and a second movable portion in an assembly state according to an embodiment of this application;
FIG. 12 is a schematic sectional view of a first elastic member, a first movable portion, and a second movable portion in an assembly state according to an embodiment of this application;
FIG. 13 is a diagram of a structure of a fastening portion according to an embodiment of this application;
FIG. 14 is a diagram of a structure of a second movable portion according to an embodiment of this application;
FIG. 15 is a schematic sectional view of a second movable portion and a fastening portion in an assembly state according to an embodiment of this application;
FIG. 16 is a schematic cross-sectional view of a second movable portion and a fastening portion in an assembly state according to an embodiment of this application;
FIG. 17 is a diagram of a structure of a second elastic member according to an embodiment of this application;
FIG. 18 is a partial enlarged diagram of a second movable portion and a fastening portion in an assembly state according to an embodiment of this application;
FIG. 19 is an assembly diagram of an optical image stabilization assembly according to an embodiment of this application; and
FIG. 20 is a diagram of a control principle of an electronic device according to an embodiment of this application.

### DESCRIPTION OF EMBODIMENTS

The following describes technical solutions in embodiments in this application with reference to accompanying drawings.

It should be noted that, in descriptions of embodiments of this application, "/" means "or" unless otherwise specified. For example, A/B may indicate A or B. In this specification, "and/or" describes only an association relationship for describing associated objects and indicates that three relationships may exist. For example, A and/or B may indicate the following three cases: Only A exists, both A and B exist, and only B exists.

Terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In addition, in the descriptions of embodiments of this application, "a plurality of" means two or more, and "at least one" and "one or more" mean one, two, or more. The singular expression forms "one", "a", "the", "the foregoing", "this", and "the one" are intended to include an expression form like "one or more", unless the opposite is explicitly indicated in the context thereof.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner.

In the descriptions of embodiments of this application, orientations or location relationships indicated by terms such as "up", "down", "left", "right", "inside", "outside", "vertical", and "horizontal" are defined relative to orientations or locations in which components in the accompanying drawings are schematically placed. It should be understood that these direction terms are relative concepts and are used for relative descriptions and clarification, rather than indicating or implying that an indicated apparatus or element needs to have a particular orientation, or be constructed and operated in a particular orientation. These orientation terms may change accordingly based on changes of the orientations in which the component in the accompanying drawings are placed, and therefore cannot be construed as a limitation on this application. In addition, in this application, "perpendicular" is not strictly perpendicular, but within an allowable error range. "Parallel" is not strictly parallel, but within an allowable error range.

In embodiments of this application, a same reference numeral indicates a same component or a same part. For a same part in embodiments of this application, only one part or component may be used as an example to mark a reference numeral in the figure. It should be understood that, for another same part or component, reference numerals are also applicable. In addition, parts in the accompanying drawings are not drawn strictly to scale. Dimensions and sizes of the parts shown in the figures are merely examples. This should not be construed as a limitation on this application.

For ease of understanding, the following first explains and describes technical terms in this application.

An optical axis is an imaginary line in an optical system, and may be understood as a direction in which light propagates through the optical system. For a symmetric transmission system, the optical axis generally coincides with a rotation center line of the optical system. If the light coincides with the optical axis, the light is transmitted along the optical axis in the optical system.

Optical image stabilization (optical image stabilization, OIS) is a technology in which in an imaging instrument like a mobile phone or a camera, an optical component is disposed, to avoid or reduce an instrument shake that occurs in a process of capturing an optical signal, so as to improve imaging quality. A common method is to perform shake detection by using a gyroscope, and then an OIS motor is used to pan or rotate the optical component in a reverse direction, to compensate for image blur caused by a shake of the imaging instrument during exposure.

Tilt (tilt) refers to a relative tilt angle between a lens carrier center and a reference vertical line.

A voice coil motor (voice coil motor, VCM) is an apparatus that converts electric energy into mechanical energy, and generates a motion by using actions exerted on magnetic poles by a magnetic field of a permanent magnet and a magnetic field generated by an energized coil conductor, to implement a linear motion and a motion with a limited swing angle. A working principle is as follows: When the energized conductor passes through a magnetic field, a force perpendicular to a magnetic field line is generated. A magnitude of the force depends on a length of the conductor that passes through the field, and strength of the magnetic field and a current.

A focal length (focal length) refers to a vertical distance from an optical center of a lens or a lens group to a focal point (or a focal plane) when a clear image of an infinite scene is formed on the focal plane through the lens or the lens group. For a prime lens, a location of an optical center is fixed, and therefore a focal length is fixed. For a zoom lens, a change of an optical center of the lens causes a change of a focal length of the lens, and therefore the focal length can be adjusted.

Based on a zoom focal length range, lenses can be classified into an ultra wide-angle lens (a focal length less than 21 mm), a wide-angle lens (a focal length ranging from 21 mm to 35 mm), a standard lens (a focal length ranging from 35 mm to 70 mm), a medium-long focus lens (a focal length ranging from 70 mm to 135 mm), a long-focus lens (a focal length ranging from 135 mm to 500 mm+), and the like.

The focal length of the zoom lens has two readings. An end with a smaller number is referred to as a wide-angle end (a maximum angle of view can be obtained), and an end with a larger number is referred to as a telephoto end (a maximum focal length can be obtained). During shooting, any focal length within this two-focal length end range may be used. A wider wide-angle end (that is, a smaller number) of the focal length of the lens indicates that a wider scene can be shot, and a longer telephoto end (that is, a larger number) indicates that a farther scene can be shot. A value obtained by dividing the number at the telephoto end by the number at the wide-angle end is a zoom ratio.

Optical zoom means that zoom is implemented by using a structure of an optical lens, and is generated by changing locations of a lens, an object, and a focus. Specifically, the locations of the foregoing three elements may be changed by changing relative locations of lens elements in the lens, to change a focal length of the lens, so that a scene that needs to be shot can be zoomed in or zoomed out. This image is zoomed in by using a physical principle. In a zoom-in process, a photosensitive element directly senses light from a shot object and forms an image without any other electronic magnification processing. In addition, in this process, the photosensitive element performs full-frame imaging, and an original highest resolution can be retained.

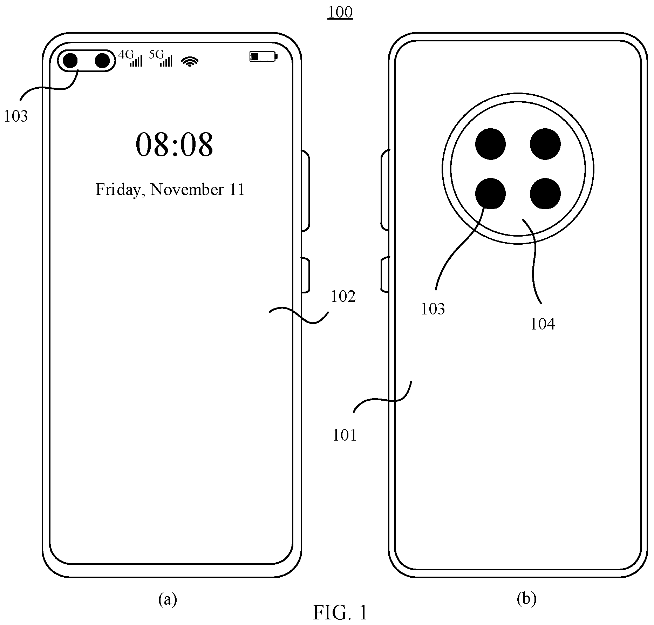

FIG. 1 is a diagram of a structure of an electronic device according to an embodiment of this application.

An electronic device 100 in this embodiment of this application is an electronic device having an imaging function (for example, video/photo shooting), for example, a mobile phone, a personal digital assistant (personal digital assistant, PDA) computer, a tablet computer, a laptop, a laptop computer (laptop computer), a video camera, a video recorder, a camera, a smart watch (smart watch), a smart wristband (smart wristband), an in-vehicle computer, or a television (or a smart screen).

A specific form of the electronic device 100 is not specially limited in embodiments of this application. For ease of description and understanding, the following uses an example in which the electronic device 100 is a mobile phone for description. For example, (a) and (b) in FIG. 1 respectively schematically show a front and a back of the electronic device 100.

As shown in FIG. 1, the electronic device 100 may include a housing 101, a display (display panel, DP) 102, and a compact camera module (camera compact module, CCM) 103.

The housing 101 forms accommodation space, to accommodate components of the electronic device 100. The housing 101 may further protect the electronic device 100 and support the entire device. The display 102 and the compact camera module 103 are disposed in the accommodation space of the housing 101, and are connected to the housing 101. In some embodiments, the housing 101 may include a rear cover disposed opposite to the display 102 and a middle frame disposed inside the electronic device 100. The display 102 and the compact camera module 103 may be fastened to the middle frame. A material of the housing 101 may be metal, plastic, ceramic, or glass.

The display 102 is configured to display an image, for example, display an image captured by the compact camera module 103. The display 102 may be a liquid crystal display (liquid crystal display, LCD), an organic light emitting diode (organic light emitting diode, OLED) display, or the like. The OLED display may be a flexible display or a rigid display. The display 102 may be a regular screen, or may be a special-shaped screen, a foldable screen, or the like. The display 102 may be disposed on the front and/or the back of the electronic device 100. Herein, the front of the electronic device 100 may be understood as a side facing a user when the user uses the electronic device 100, and the back of the electronic device 100 may be understood as a side away from the user when the user uses the electronic device 100.

The compact camera module 103 is configured to capture a static image or a video. The compact camera module 103 may be disposed on the front and/or the back of the electronic device 100. When the compact camera module 103 is disposed on the front of the electronic device 100, the compact camera module 103 may be configured to shoot a scene on the front side of the electronic device 100, for example, configured to take a selfie, and may be referred to as a front-facing camera in some embodiments. When the compact camera module 103 is disposed on the back of the electronic device 100, the compact camera module 103 may be configured to shoot a scene on the back side of the electronic device 100, and may be referred to as a rear-facing camera in some embodiments. During image shooting, the user may select a corresponding compact camera module based on an image shooting requirement.

It may be understood that a mounting location of the compact camera module 103 in FIG. 1 is merely an example.

In some embodiments, when the compact camera module 103 is used as a front-facing camera, the compact camera module 103 may be mounted at a location, on the front of the electronic device 100, other than a location of the display 102, for example, a left side of an earpiece, an upper middle of the electronic device 100, a lower part (or referred to as a chin) of the electronic device 100, or four corners of the electronic device 100. The compact camera module 103 may alternatively be disposed in a hollow region on the display 102. When the compact camera module 103 is used as a rear-facing camera, the compact camera module 103 may be mounted at any location on the back of the electronic device 100, for example, an upper left corner, an upper right corner, or an upper middle location.

In some other embodiments, the compact camera module 103 may alternatively not be disposed on a body of the electronic device 100, but is disposed on an edge protruding relative to the body of the electronic device 100, or may be disposed on a component that is movable or rotatable relative to the electronic device 100. The component may be extended and retracted or rotated on the body of the electronic device 100, so that the compact camera module 103 can be hidden inside the electronic device 100, or at least a part popped out from the electronic device 100. When the compact camera module 103 can be rotated relative to the electronic device 100, the compact camera module 103 is equivalent to a front-facing camera and a rear-facing camera. To be specific, by rotating a same compact camera module 103, both a scene on the front side of the electronic device 100 and a scene on the back side of the electronic device 100 can be shot.

**In** some other embodiments, when the display 101 can be folded, the compact camera module 103 may be used as a front-facing camera or a rear-facing camera as the display 102 is folded.

A quantity of disposed compact camera modules 103 is not limited in embodiments of this application, and may be one, two, four, or more. For example, one or more compact camera modules 103 may be disposed on the front of the electronic device 100, and/or one or more compact camera modules 103 may be disposed on the back of the electronic device 100. When a plurality of compact camera modules 103 are disposed, the plurality of compact camera modules 103 may be completely the same, or may be different, for example, optical parameters of lenses of the plurality of compact camera modules 103 are different, disposition locations of the lenses are different, or forms of the lenses are different. A relative location at which the plurality of compact camera modules are disposed is not limited in embodiments of this application either.

Optionally, in some embodiments, the electronic device 100 may further include a protective lens element 104 configured to protect the compact camera module 103. The protective lens element 104 is disposed on the housing 101, and covers the compact camera module 103.

In some embodiments, when the protective lens element 104 is configured to protect the front-facing camera, the protective lens element 104 may cover only a front-facing compact camera module or cover the entire front of the electronic device 100. When the protective lens element 104 covers the entire front of the electronic device 100, the protective lens element 104 may be configured to protect both the front-facing compact camera module and the display 102, and the protective lens element 104 is a cover glass (cover glass, CG).

In some embodiments, when the protective lens element 104 is configured to protect the rear-facing camera, the protective lens element 104 may cover the entire back of the electronic device 100, or may be disposed only at a location corresponding to a rear-facing compact camera module.

A material of the protective lens element 104 may be glass, sapphire, ceramic, or the like. This is not specially limited in embodiments of this application. **In** some embodiments, the protective lens element 104 is transparent, and light outside the electronic device 100 can enter the compact camera module 103 through the protective lens element 104.

It should be understood that the structure shown in FIG. 1 does not constitute a specific limitation on the electronic device 100, and the electronic device 100 may include more or fewer components than those shown in the figure, for example, the electronic device 100 may further include one or more of components such as a battery, a flash, a fingerprint recognition module, an earpiece, a button, or a sensor. A component layout different from that shown in the figure may alternatively be disposed in the electronic device 100.

With continuous development of electronic device technologies, an image shooting function has become an important feature of an electronic device (for example, a mobile phone or a tablet computer) and a main indicator for evaluating performance of the electronic device. To meet various requirements of a user, for example, implement camera-like image shooting experience or adapt to image shooting in different scenes, a lens (that is, a compact camera module) on the electronic device may implement zoom, so that both a near image and a far image can be clearly imaged.

Generally, a zoom lens easily implements adjustment of a short focal length. However, for adjustment of a long focal length, due to a limitation of a thickness of the electronic device, a zoom ratio that can be achieved is small (for example, 3X (3X) long focal length), and object zoom-in effect, background blurring effect, or the like is not obvious. For a requirement for a longer focal length and lightness and thinness of the electronic device, a periscope structure of a prism is usually added. The periscope structure is similar to a periscope, and can turn an optical path to implement a long focal length.

In this embodiment of this application, the compact camera module 103 shown in FIG. 1 is a periscope compact camera module. Specifically, a lens group in the compact camera module 103 is horizontally arranged, and light entering the compact camera module 103 can reach an image sensor via elements such as a reflector, a lens, and a prism, and an optical path is folded. In this way, a focal length can be adjusted by floating the lens group inside the electronic device, to implement optical zoom without a need to protrude the lens group from the body of the electronic device. It should be understood that the "horizontal" direction herein is a direction perpendicular to a thickness direction of the electronic device 100. In some embodiments, the periscope compact camera module may also be referred to as a foldable compact camera module.

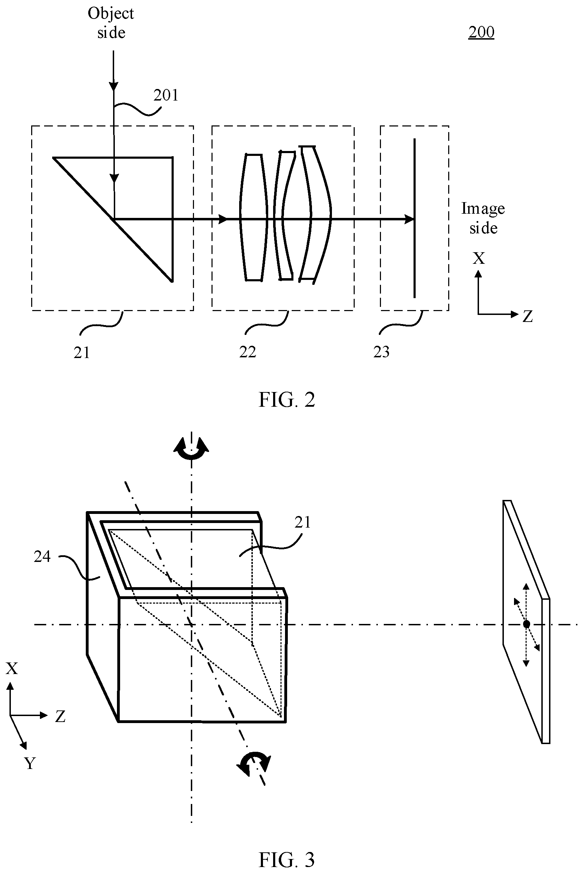

FIG. 2 is a diagram of a structure of a compact camera module according to an embodiment of this application. The compact camera module 200 in FIG. 2 may be an example structure of the compact camera module 103 in FIG. 1, and the compact camera module 200 is a periscope compact camera module.

As shown in FIG. 2, the compact camera module 200 includes an optical element 21, a lens group 22, and an image sensor 23 that are sequentially arranged in a transmission direction of an imaging light beam 201. Herein, the imaging light beam 201 is a light beam including light incident to the compact camera module 200.

For ease of description, the following defines an optical axis direction of the compact camera module 200 (specifically, the lens group 22) as a direction Z (for example, a horizontal direction on a paper surface shown in FIG. 2, which may also be referred to as a Z-axis direction). A direction perpendicular to the optical axis and parallel to a direction in which the imaging light beam 201 is incident to the optical element 21 is a direction X (for example, a vertical direction on the paper surface shown in FIG. 2, which may also be referred to as an X-axis direction). A direction perpendicular to the optical axis direction and a first direction is a direction Y (for example, a direction perpendicular to the paper surface shown in FIG. 2, which may also be referred to as a Y-axis direction). More specifically, the following are defined: a direction of an X-axis facing an object side is a positive direction of the X-axis, and a direction of the X-axis away from the object side is a negative direction of the X-axis; a direction of a Z-axis facing an image side is a positive direction of the Z-axis, and a direction of the Z-axis away from the image side is a negative direction of the Z-axis; and a positive direction of a Y-axis is a direction clockwise rotated from the positive direction of the Z-axis, and a negative direction of the Y-axis is a direction counterclockwise rotated from the positive direction of the Z-axis. Similarly, definitions of the directions X, Y, and Z are also applicable to the accompanying drawings to be described below. It should be noted that the definitions of the directions X, Y, and Z are merely intended to facilitate description of a location relationship and a connection relationship between components in embodiments of this application, and should not be construed as a limitation on embodiments of this application.

In some embodiments, for ease of description, the direction X may also be referred to as a first direction, the direction Z may also be referred to as a second direction, and the direction Y may also be referred to as a third direction.

The optical element 21 is configured to fold an optical path of the received imaging light beam 201 and transfer the imaging light beam 201 to the lens group 22, to adjust light incident in the first direction to be transmitted in the second direction. Optical path folding is also referred to as optical path turning, and refers to changing a transmission path of light. For example, the optical element 21 may be a reflection element like a prism (for example, a right-angle prism or a triangular prism) or a reflector. In some embodiments, the optical element 21 may also be referred to as an optical folding element.

The lens group 22 is configured to transmit the received imaging light beam 201 to the image sensor 23, to image an object-side scene on an image-side imaging surface. Herein, the object side is a side on which a to-be-shot object is located, and the image side is a side on which an image of the to-be-shot object is located. The lens group 22 may further perform specific processing on the received imaging light beam 201, for example, processing such as aberration correction or achromatism. The lens group 22 may include at least one lens (or referred to as a lens element), and the at least one lens may be different or may be the same. A quantity of lenses included in the lens group 22 and a lens material are not specifically limited in embodiments of this application. A person skilled in the art may correspondingly set the quantity of lenses based on an actual requirement, or set a combination manner of a solid lens (a lens parameter is fixed) and/or a liquid lens (a lens parameter may be dynamically adjusted). No more descriptions are provided herein.

The lens group 22 may further include a lens barrel configured to accommodate the at least one lens. To implement zoom, the lens barrel may be an entirety, and the at least one lens is accommodated in the entirety lens barrel. However, a relative location between lenses may be adjusted through another structure. Alternatively, the lens barrel may include a plurality of lens barrel parts, the at least one lens is grouped and disposed in the plurality of lens barrel parts, and a relative location between the plurality of lens barrel parts may be adjusted, to implement adjustment of the relative location between lenses.

The image sensor 23 is disposed on a rear side of the lens group 22, and is mainly configured to perform imaging. Specifically, the image sensor 23 has an image capture region (also referred to as a photosensitive region or a photosensitive surface), and the image sensor 23 captures the received imaging light beam 201 in the image capture region. The image sensor 23 is a device having an optical-to-electrical conversion function, and can convert an optical signal of the imaging light beam 201 captured in the image capture region into an electrical signal in a corresponding proportion relationship with the optical signal. The image sensor may be a CCD image sensor including a charged coupled device (charged coupled device, CCD) or a CMOS image sensor including a complementary metal-oxide semiconductor (complementary metal-oxide semiconductor, CMOS).

It can be learned from FIG. 2 that the optical element 21, the lens group 22, and the image sensor 23 are sequentially arranged in the optical axis direction. An imaging principle of the compact camera module 200 is as follows: Light entering the compact camera module from the object side is bent through the optical element 21, and a bent light beam is projected onto the image sensor 23 through the lens group 22, to implement imaging of the object.

In some embodiments, the compact camera module 200 may further include a light filter (for example, an infra-red cut filter (infra-red cut filter, IRCF) or a light filter that filters out light in another light wave band). The light filter is disposed between the lens group 22 and the image sensor 23. For example, when the light filter is an IRCF, unnecessary light projected onto the image sensor 23 can be eliminated, to prevent problems such as ghosting, stray light, and color cast from occurring during imaging of the image sensor 23.

In some embodiments, the optical element 21 may be made of a material with a near-infrared wave band absorption characteristic, for example, blue glass (blue glass) or a resin-type absorption material, or colorless glass coated by an absorption material film, to implement a near-infrared cut capability of the compact camera module 200. Alternatively, a material of the optical element 21 may be white glass, so that at least one surface through which the imaging light beam 201 is transmitted may be covered with a near-infrared cut coating, to implement a near-infrared cut capability of the compact camera module 200.

The compact camera module 200 may further include a housing configured to accommodate the entire compact camera module, a connector, a circuit board, a peripheral electronic component, and the like. Details are not described herein.

To reduce image blur caused by a shake in an image shooting process and improve imaging quality, the periscope compact camera module generally has an optical image stabilization function. For the periscope compact camera module, a voice coil motor is usually used to drive the optical element 21 to rotate, to perform shake compensation.

FIG. 3 is a diagram of optical image stabilization of a periscope compact camera module.

As shown in FIG. 3, the optical element 21 is fastened to a voice coil motor 24. The voice coil motor 24 may drive the optical element 21 to rotate around a Y-axis, to perform image stabilization compensation on a shake in a direction X. **In** addition, the voice coil motor 24 may drive the optical element 21 to rotate around an X-axis, to perform image stabilization compensation on a shake in a direction Y. **In** other words, the voice coil motor 24 can implement rotation of the optical element 21 at two degrees of freedom, that is, the voice coil motor 24 can control the optical element 21 to rotate around the X-axis and the Y-axis. In this embodiment of this application, a motion of the optical element 21 under driving of the voice coil motor 24 may also be referred to as a double degree of freedom tilt-shift rotation motion. Correspondingly, the voice coil motor 24 may also be referred to as a two-axis rotary voice coil motor.

Generally, an electronic device may be moved at six degrees of freedom due to a shake, including three translational degrees of freedom and three rotational degrees of freedom. Specifically, the three translational degrees of freedom include movement in an X-axis direction, movement in a Y-axis direction, and movement in a Z-axis direction. The three rotational degrees of freedom include rotation around the X-axis, rotation around the Y-axis, and rotation around a Z-axis. Rotation of the optical element 21 around the X-axis and rotation of the optical element 21 around the Y-axis may be understood as degrees of freedom in required motion directions.

In an existing periscope compact camera module, due to a limitation of a structure design of the voice coil motor, when the voice coil motor drives the optical element to rotate around the X-axis and the Y-axis to perform shake compensation, the optical element further has a degree of freedom in an undesired motion direction, for example, at least one of movement in the X-axis direction, movement in the Y-axis direction, movement in the Z-axis direction, and rotation around the Z-axis. In this case, a shake compensation process of the voice coil motor may be interfered with by the degree of freedom in the undesired motion direction. Consequently, image stabilization effect of the voice coil motor is poor, image stabilization quality is affected, and image shooting effect is unsatisfactory.

Therefore, embodiments of this application provide a voice coil motor and an optical image stabilization assembly, to improve an anti-interference capability of the voice coil motor by limiting a degree of freedom of an optical element in an undesired motion direction, so as to improve optical image stabilization effect and improve imaging quality.

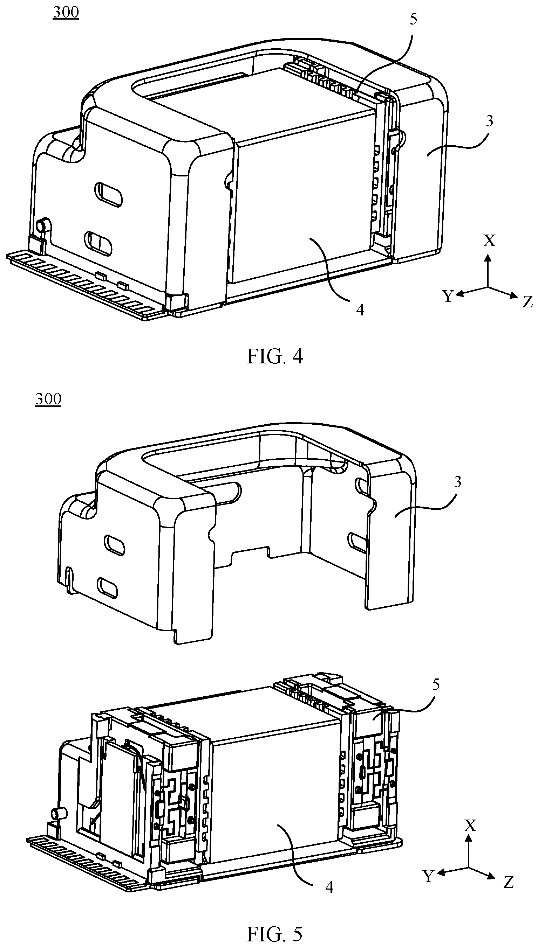

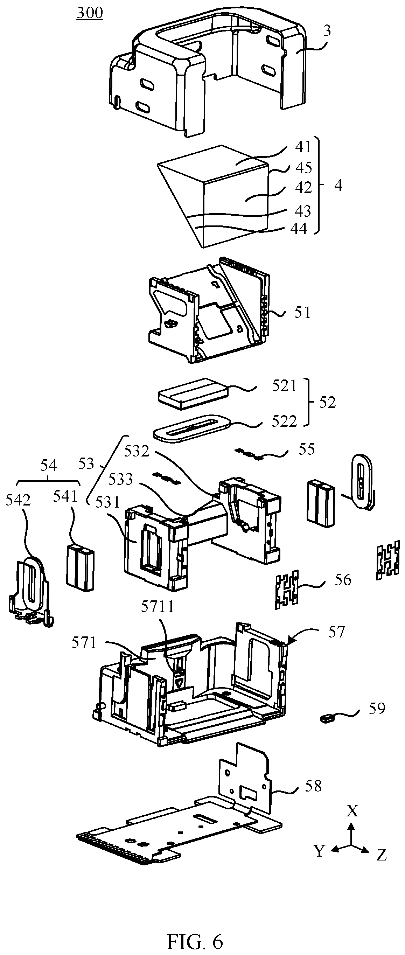

FIG. 4 to FIG. 6 each are a diagram of a structure of an optical image stabilization assembly according to an embodiment of this application. FIG. 4 is an assembly diagram of the optical image stabilization assembly. FIG. 5 and FIG. 6 each are an exploded view of the optical image stabilization assembly.

As shown in FIG. 4 and FIG. 5, an optical image stabilization assembly 300 includes a housing 3, an optical element 4, and a voice coil motor 5. The optical element 4 is fastened to the voice coil motor 5, and the voice coil motor 5 is configured to drive the optical element 4 to rotate along an X-axis and rotate along a Y-axis, to separately perform image stabilization compensation on a shake in a direction Y and a shake in a direction X. The housing 3 forms accommodation space, and is configured to accommodate the optical element 4 and the voice coil motor 5. To avoid hindering light transmission, regions that are on the housing 3 and that correspond to an incident surface and an emergent surface of the optical element 4 are hollowed out or provided with holes, so that the optical element 4 can receive an imaging light beam, and after an optical path of the imaging light beam is folded, the imaging light beam is transmitted to a lens group.

In this embodiment of this application, the optical element 4 may be an example structure of the optical element 21 in FIG. 2, and the voice coil motor 5 may be an example structure of the voice coil motor 24 in FIG. 2. The incident surface of the optical element herein is a surface on which the optical element receives the imaging light beam, and the emergent surface of the optical element is a surface on which the imaging light beam passes through the optical element, or is understood as a surface on which the optical element exports the imaging light beam.

In some embodiments, the optical element 4 may be a right-angle prism. For example, as shown in FIG. 6, the optical element 4 may include a first right-angle surface 41, a second right-angle surface 42, and an inclined surface 43. The first right-angle surface 41, the second right-angle surface 42, and the inclined surface 43 are sequentially connected in a direction of rotation around the Y-axis. More specifically, the first right-angle surface 41 is parallel to a plane YZ, the second right-angle surface 42 is parallel to a plane XY, the first right-angle surface 41 is perpendicular to the second right-angle surface 42, and the inclined surface 43 is connected to the first right-angle surface 41 and the second right-angle surface 42. Herein, the first right-angle surface 41 is the incident surface of the optical element 4, and the second right-angle surface 42 is the emergent surface of the optical element 4. The optical element 4 is located on an optical path of incident light, and the inclined surface 43 may reflect the incident light by 90°. The lens group 22 and the image sensor 23 shown in FIG. 2 are sequentially disposed on an optical path of the reflected incident light. The optical element 4 further includes a first connection surface 44 and a second connection surface 45 that are disposed opposite to each other in a Y-axis direction. Both the first connection surface 44 and the second connection surface 45 are adjacent to the first right-angle surface 41, the second right-angle surface 42, and the inclined surface 43.

As shown in FIG. 6, the voice coil motor 5 may include a first movable portion 51, a first actuating portion 52, a second movable portion 53, a second actuating portion 54, a first elastic member 55, and a fastening portion 57. The first movable portion 51 is configured to fasten to the optical element 4, and the optical element 4 is configured to adjust light incident in an X-axis direction to be transmitted in a Z-axis direction. The first actuating portion 52 is configured to drive the first movable portion 51 to rotate around the Y-axis direction relative to the fastening portion 57. The second movable portion 53 is connected to the first movable portion 51 through the first elastic member 55, and the second movable portion 53 is configured to support the first movable portion 51. The second actuating portion 54 is configured to drive the second movable portion 53 to rotate around the X-axis direction relative to the fastening portion 57.

In some embodiments, the voice coil motor 5 further includes a second elastic member 56, and the second elastic member 56 is configured to connect the second movable portion 53 and the fastening portion 57.

In some embodiments, the voice coil motor 5 further includes a circuit board 58, and the circuit board 58 is configured to provide a current signal for the voice coil motor 5.

The following describes components and connection relationships of the components in detail with reference to the accompanying drawings.

The first movable portion 51 is fastened to the optical element 4, and is configured to bear the optical element 4. As an example instead of a limitation, the first movable portion 51 includes a connection surface that adapts to an inclination degree of the inclined surface 43 of the optical element 4, and the optical element 4 may be fastened to the first movable portion 51 through bonding between the inclined surface 43 and the connection surface.

The second movable portion 53 is approximately U-shaped, and is disposed on a periphery of the first movable portion 51 in a direction of rotation around the X-axis. The first movable portion 51 is connected to the second movable portion 53 through the first elastic member 55. In this embodiment of this application, the first elastic member 55 is flexible and can be elastically deformed. Therefore, the first movable portion 51 is equivalent to being suspended in accommodation space of the second movable portion 53. The second movable portion 53 is configured to bear the first movable portion 51 and the optical element 4, and the second movable portion 53 is equivalent to a support member of the first movable portion 51 and the optical element 4.

The second movable portion 53 is movably connected to the fastening portion 57. For example, as shown in FIG. 6, the second movable portion 53 includes a first support portion 531, a second support portion 532, and a third support portion 533. The first support portion 531 and the second support portion 532 are disposed opposite to each other in the Y-axis direction, and two ends of the third support portion 533 in the Y-axis direction are respectively connected to the first support portion 531 and the second support portion 532. The first support portion 531 and the second support portion 532 are respectively disposed on two sides of the first movable portion 51 in the Y-axis direction, and the third support portion 533 is disposed on a side that is of the first movable portion 51 and that is away from an imaging surface (or the lens group, or the image sensor) in the Z-axis direction. In this embodiment of this application, the third support portion 533 is movably connected to the fastening portion 57 at a middle location in the Y-axis direction. Herein, the fastening portion 57 is a relatively fastened component in the optical image stabilization assembly 300.

The first actuating portion 52 is connected to the first movable portion 51, and is configured to drive the first movable portion 51 to rotate around the Y-axis, so as to drive the optical element 4 to rotate around the Y-axis. For example, the first actuating portion 52 may include a first magnet 521 and a first coil 522 that are disposed opposite to each other in the X-axis direction. The first magnet 521 is disposed on the first movable portion 51, and the first coil 522 is disposed on the fastening portion 57. After the first coil 522 is powered on, it can be learned, according to the left-hand rule and the Ampere's law, that the first magnet 521 is subject to a force in the Z-axis direction. Because the first magnet 521 is fastened to the first movable portion 51, the first magnet 521 may drive the first movable portion 51 to move along a Z-axis. The first movable portion 51 is connected to the second movable portion 53 through the first elastic member 55, and a motion of the first movable portion 51 causes the first elastic member 55 to be bent and deformed, so that the first movable portion 51 rotates around the Y-axis.

It may be learned that, under an action of a magnetic field of the first coil 522, the first magnet 521 may be subject to a force in a positive direction or a negative direction of the Z-axis. Therefore, a magnitude and a direction of a current of the first coil 522 are changed, so that a magnitude and a direction of a force applied to the first magnet 521 covered by the magnetic field can be controlled, to control a motion track and a movement location of the first magnet 521, and further control a direction and an angle of rotation of the optical element 4 (or the first movable portion 51 fastened to the first magnet 521) around the Y-axis, so as to implement a shake compensation function.

In some embodiments, locations of the first magnet 521 and the first coil 522 may be exchanged. For example, the first magnet 521 is disposed on the fastening portion 57, and the first coil 522 is disposed on the first movable portion 51.

In this embodiment of this application, a motion that the first actuating portion 52 drives the optical element 4 to rotate around the Y-axis may also be referred to as a nod motion. The first movable portion 51 may also be referred to as a Y-axis base or a first rotation bracket of the optical element 4.

The second actuating portion 54 is connected to the second movable portion 53, and is configured to drive the second movable portion 53 to rotate around the X-axis, so as to drive the optical element 4 to rotate around the X-axis. For example, the second actuating portion 54 may include a second magnet 541 and a second coil 542 that are disposed opposite to each other in the Y-axis direction. The second magnet 541 is disposed on the second movable portion 53, and the second coil 542 is disposed on the fastening portion 57. After the second coil 542 is powered on, it can be learned, according to the left-hand rule and the Ampere's law, that the second magnet 541 is subject to a force in the Z-axis direction. Because the second magnet 541 is fastened to the second movable portion 53, the second magnet 541 drives the second movable portion 53 to move along the Z-axis, and because the second movable portion 53 is movably connected to the fastening portion 57, the second magnet 541 drives the second movable portion 53 to rotate around the X-axis.

It may be learned that, under an action of a magnetic field of the second coil 542, the second magnet 541 may be subject to a force in a positive direction or a negative direction of the Z-axis. Therefore, a magnitude and a direction of a current of the second coil 542 are changed, so that a magnitude and a direction of a force applied to the second magnet 541 covered by the magnetic field can be controlled, to control a motion track and a movement location of the second magnet 541, and further control a direction and an angle of rotation of the optical element 4 (or the second movable portion 53 fastened to the second magnet 541) around the X-axis, so as to implement a shake compensation function.

In some embodiments, locations of the second magnet 541 and the second coil 542 may be exchanged. For example, the second magnet 541 is disposed on the fastening portion 57, and the second coil 542 is disposed on the second movable portion 53.

In some embodiments, the second actuating portion 54 may include two second magnets 541 and two second coils 542, one group of the second magnet 541 and the second coil 542 is disposed on a side of the first support portion 531 of the second movable portion 53, and the other group of the second magnet 541 and the second coil 542 is disposed on a side of the second support portion 532 of the second movable portion 53. For example, one second magnet 541 is fastened to the first support portion 531, and the other second magnet 541 is fastened to the second support portion 532. The two second coils 542 are disposed on the fastening portion 57, and one second coil 542 and the second magnet 541 that is disposed on the first support portion 531 are disposed opposite to each other in the Y-axis direction, and the other second coil 542 and the second magnet 541 that is disposed on the second support portion 532 are disposed opposite to each other in the Y-axis direction.

In this case, directions of currents in the two second coils 542 are opposite. **In** this way, under an action of a magnetic field, one second magnet 541 is subject to a force in the positive direction of the Z-axis, and the other second magnet 541 is subject to a force in the negative direction of the Z-axis. Under driving of the two second magnets 541, the second movable portion 53 rotates in a same direction around the X-axis.

The two groups of the second magnets 541 and the second coils 542 are used, so that actuation stability and an actuation speed of the second actuating portion 54 can be improved, to improve optical image stabilization effect and optical image stabilization efficiency.

In some embodiments, the second actuating portion 54 may alternatively include only one second magnet 541 and one second coil 542. The second magnet 541 and the second coil 542 may be disposed on a side of the first support portion 531, or may be disposed on a side of the second support portion 532.

In this case, one group of the second magnet 541 and the second coil 542 is used, so that weights of the entire voice coil motor 5 and the optical image stabilization assembly 300 can be reduced while an actuation function is implemented. This facilitates lightweight of the electronic device. In addition, because only one second coil 542 is involved, a circuit layout may also be simplified.

In this embodiment of this application, a motion that the second actuating portion 54 drives the optical element 4 to rotate around the X-axis may also be referred to as a head shake motion. The second movable portion 53 may also be referred to as an X-axis base or a second rotation bracket of the optical element 4.

In this embodiment of this application, the second movable portion 53 is movably connected to the fastening portion 57 through fit between a protrusion and a groove or fit between a ball and grooves, and a fulcrum is provided for the second movable portion to rotate around the X-axis. To prevent the second movable portion 53 from being detached from the fastening portion 57, a pre-pressure needs to be provided between the second movable portion 53 and the fastening portion 57.

In some embodiments, the pre-pressure may be provided in a magnetic attraction manner. For example, as shown in FIG. 6, a first groove 5711 may be provided on a wall 571 that is of the fastening portion 57 and that faces the third support portion 533, and the first groove 5711 is configured to accommodate a magnetic element, for example, a third magnet 59. The third magnet 59 is fastened to the first groove 5711. A ferromagnetic substance (for example, metal such as iron, nickel, or cobalt) may be disposed in a region that is on the third support portion 533 and that is opposite to the first groove 5711. For example, a part that is on the third support portion 533 and that is opposite to the first groove 5711 is made of the ferromagnetic substance, or a component prepared by the ferromagnetic substance, for example, a magnetic conductive member, is fastened to a surface that is of the third support portion 533 and that faces the first groove 5711. In this way, the pre-pressure between the second movable portion 53 and the fastening portion 57 can be provided by a magnetic attraction force between the third magnet 59 and the ferromagnetic substance.

In some embodiments, the pre-pressure may be provided by elastic deformation of the elastic member. For example, as shown in FIG. 6, the voice coil motor 5 may further include the second elastic member 56, and two ends of the second elastic member 56 in the Y-axis direction are respectively connected to the second movable portion 53 and the fastening portion 57. In this embodiment of this application, a distance between a surface of a side that is of the second movable portion 53 and that is away from the third support portion 533 in the Z-axis direction and a surface of a side that is of the fastening portion 57 and that is away from the wall 571 in the Z-axis direction may be set to be greater than 0. Alternatively, it is understood that the second movable portion 53 protrudes from the fastening portion 57 in the Z-axis direction. In this way, there is a specific distance in the Z-axis direction between the two ends of the second elastic member 56 that are configured to connect the second movable portion 53 and the fastening portion 57, and the second elastic member 56 is elastically deformed. In this way, the pre-pressure between the second movable portion 53 and the fastening portion 57 can be provided by an elastic force generated by the elastic deformation.

A manner of providing the pre-pressure between the second movable portion 53 and the fastening portion 57 is described in more detail below with reference to the accompanying drawings, and is merely briefly described herein.

The circuit board 58 is fastened to the fastening portion 57, and is configured to transmit a current signal, for example, provide an electrical signal for the first coil 522 and the second coil 542 in the voice coil motor 5. In some embodiments, the circuit board 58 may be a flexible printed circuit (flexible printed circuit, FPC). The FPC has features of high reliability, excellent flexibility, a high wiring density, a small weight, a small thickness, and good flexibility.

As mentioned in descriptions of FIG. 6, the first movable portion 51 is connected to the second movable portion 53 through the first elastic member 55. The following provides more detailed descriptions with reference to the accompanying drawings.

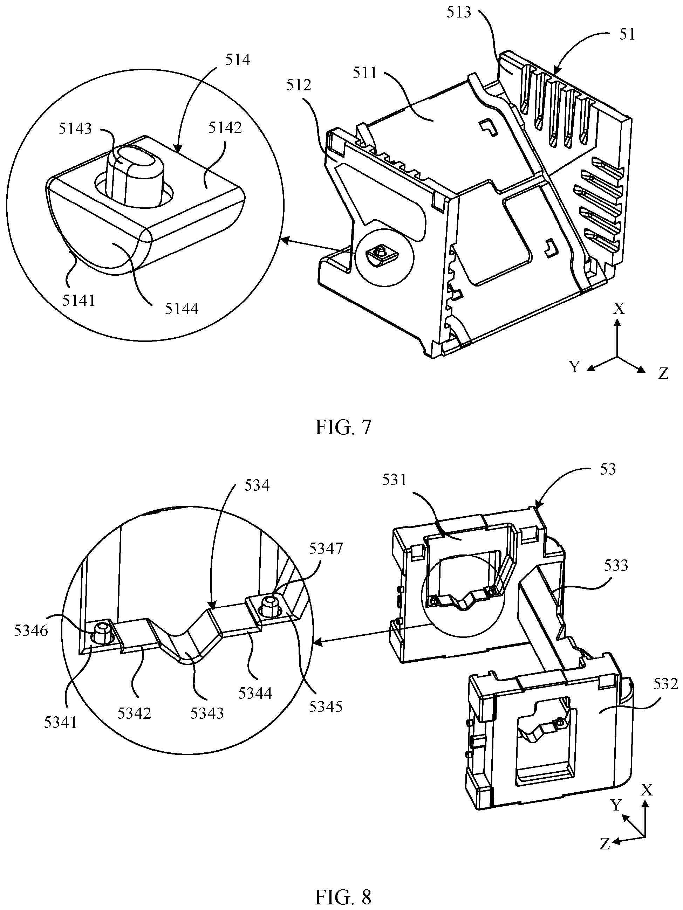

FIG. 7 is a diagram of a structure of the first movable portion 51 in FIG. 6.

As shown in FIG. 7, the first movable portion 51 may include a first body 511 and a first side wall 512 and a second side wall 513 that are located on two sides of the first body 511 (for example, two sides of the first body 511 in a Y-axis direction). The first side wall 512 and the second side wall 513 are disposed opposite to each other. In some embodiments, the first side wall 512 and the second side wall 513 are parallel to each other.

The first body 511, the first side wall 512, and the second side wall 513 form first accommodation space, and the first accommodation space is used to accommodate the optical element 4 shown in FIG. 6. In some embodiments, a shape of the first accommodation space adapts to a shape of the optical element 4. As an example instead of a limitation, the first body 511 may include an inclined surface having a same inclination degree as the inclined surface 43 of the optical element 4, and the inclined surface 43 of the optical element 4 may be fastened to the inclined surface of the first body 511. A surface that is of the first side wall 512 and that faces the second side wall 513 may be fastened to the first connection surface 44 of the optical element 4. A surface that is of the second side wall 513 and that faces the first side wall 512 may be fastened to the second connection surface 45 of the optical element 4.

As shown in FIG. 7, first fulcrum elements 514 are disposed on the first movable portion 51, and the first fulcrum element 514 is configured to connect to the second movable portion 53 through the first elastic member 55. In some embodiments, the first fulcrum element 514 is disposed on a surface that is of the first side wall 512 and that is away from the second side wall 513. For example, the first fulcrum element 514 may be a protrusion protruding in a direction away from the second side wall 513. For ease of differentiation and description, the protrusion may be referred to as a first protrusion. In this embodiment of this application, the first fulcrum element 514 includes a first arc surface 5141 protruding in a direction close to the first actuating portion 52 along an X-axis, and the first arc surface 5141 is used to be in contact with the second movable portion 53, to serve as a fulcrum to implement rotation of the first movable portion 51 around a Y-axis.

In some embodiments, the first fulcrum element 514 and the first movable portion 51 are integrally formed. Alternatively, the first fulcrum element 514 is independently prepared and then is fastened to the first movable portion 51.

In some embodiments, the first fulcrum element 514 may be fastened to the first elastic member 55 through a connection surface 5142 that is of the first fulcrum element 514 and that is opposite to the first arc surface 5141, for example, the connection surface 5142 is fastened to a part of the first elastic member 55 through bonding, welding, or the like, to implement connection between the first movable portion 51 and the second movable portion 53.

In some embodiments, a first locating pin 5143 protruding in a direction away from the first actuating portion 52 along the X-axis may be disposed on the connection surface 5142, and the first locating pin 5143 is configured to fit a hole provided on the first elastic member 55, to limit a location of the first movable portion 51.

As an example instead of a limitation, the first fulcrum element 514 may include a second body 5144 and the first locating pin 5143 that protrudes from a surface of the second body 5144 in a direction away from the first actuating portion 52, a surface that is of the second body 5144 and that is close to the first actuating portion 52 is the first arc surface 5141 protruding towards a direction of the first actuating portion 52, and a surface that is of the second body 5144 and on which the first locating pin 5143 is disposed is the connection surface 5142.

In some embodiments, the first fulcrum element 514 or the second body 5144 is a D-shaped shaft.

When the first fulcrum element 514 includes the first locating pin 5143, the connection surface 5142 may be fastened to the part of the first elastic member 55, to implement connection between the first movable portion 51 and the second movable portion 53; or the connection surface 5142 may not be fastened to the first elastic member 55, but connection between the first movable portion 51 and the second movable portion 53 is implemented through fit between the first locating pin 5143 and the hole provided on the first elastic member 55 and a support function of the second movable portion 53 on the first fulcrum element 514.

In some embodiments, similarly to the first side wall 512, the first fulcrum element 514 may also be disposed on a surface that is of the second side wall 513 and that is away from the first side wall 512. The first fulcrum element 514 disposed on the first side wall 512 and the first fulcrum element 514 disposed on the second side wall 513 are symmetrical.

In some other embodiments, a second protrusion protruding in a direction away from the first side wall 512 may also be disposed on the surface that is of the second side wall 513 and that is away from the first side wall 512, the second protrusion is fastened to a part of the first elastic member 55, and the second protrusion is not in contact with the second movable portion 53.

It should be noted that the direction away from the first actuating portion 52 along the X-axis in this embodiment of this application may also be understood as a direction towards incident light (or an object side), namely, a positive direction of the X-axis. Similarly, the direction close to the first actuating portion 52 along the X-axis may also be understood as a direction away from the incident light (or the object side), namely, a negative direction of the X-axis.

FIG. 8 is a diagram of a structure and a partial enlarged diagram of the second movable portion 53 in FIG. 6.

As shown in FIG. 8, the second movable portion 53 includes the first support portion 531, the second support portion 532, and the third support portion 533. The first support portion 531 and the second support portion 532 are disposed opposite to each other in a Y-axis direction, and two ends of the third support portion 533 in the Y-axis direction are respectively connected to the first support portion 531 and the second support portion 532.

In this embodiment of this application, in an assembly state, the second movable portion 53 is disposed around the outside of the first movable portion 51, the first support portion 531 is located on a side that is of the first side wall 512 and that is away from the second side wall 513, and the second support portion 532 is located on a side that is of the second side wall 513 and that is away from the first side wall 512. The first support portion 531 of the second movable portion 53 is disposed opposite to the first side wall 512 of the first movable portion 52, the second support portion 532 of the second movable portion 53 is disposed opposite to the second side wall 513 of the first movable portion 52, and the third support portion 533 of the second movable portion 53 is located on the outside of the first body 511 of the first movable portion 52.

As shown in FIG. 8, bearing tables 534 are disposed on the second movable portion 53. In some embodiments, the bearing table 534 is disposed on a side that is of the first support portion 531 and that faces the second support portion 532, a table surface of the bearing table 534 faces a positive direction of an X-axis, and the bearing table 534 is configured to bear the first elastic member 55 and the first fulcrum element 514 of the first movable portion 51, to implement connection between the first movable portion 51 and the second movable portion 53.

In some embodiments, the table surface of the bearing table 534 includes a first section surface 5341, a second section surface 5342, a third section surface 5343, a fourth section surface 5344, and a fifth section surface 5345 that are sequentially connected in a Z-axis direction. In other words, two ends of the third section surface 5343 in the Z-axis direction are respectively connected to the second section surface 5342 and the fourth section surface 5344, one end that is of the second section surface 5342 and that is away from the third section surface 5343 in the Z-axis direction is connected to the first section surface 5341, and one end that is of the fourth section surface 5344 and that is away from the third section surface 5343 in the Z-axis direction is connected to the fifth section surface 5345.

The first section surface 5341 and the fifth section surface 5345 are on a same plane, for example, are both located on a first plane. The first plane is parallel to a plane YZ, that is, perpendicular to a direction X. The first section surface 5341 and the fifth section surface 5345 are used to fasten to a first connection portion of the first elastic element 55. For example, the first section surface 5341 and the fifth section surface 5345 are fastened to two ends of the first elastic member 55, so that the first elastic member 55 is fastened to the second movable portion 53.

In some embodiments, the first section surface 5341 is provided with a second locating pin 5346 protruding in a positive direction of the X-axis, and the fifth section surface 5345 is provided with a third locating pin 5347 protruding in the positive direction of the X-axis. The second locating pin 5346 and the third locating pin 5347 are configured to fit holes provided on the first elastic member 55, to limit a relative location relationship between the first elastic member 55 and the bearing table 534.

A first step is formed between the first section surface 5341 and the second section surface 5342, and a second step is formed between the fifth section surface 5345 and the fourth section surface 5344. In other words, the first section surface 5341 and the second section surface 5342 form a step surface, and the fifth section surface 5345 and the fourth section surface 5344 form a step surface. The first step and the second step are configured to reserve space for deformation of the first elastic member 55.

In some embodiments, the second section surface 5342 and the fourth section surface 5344 are on a same plane, for example, are both located on a second plane. The second plane is parallel to the plane YZ, and the second plane is lower than the first plane in the direction X. A distance between the second section surface 5342 and the first plane and a distance between the fourth section surface 5344 and the first plane are used to provide deformation space of a deformation portion of the first elastic member 55. Correspondingly, a height of the first step is equal to a height of the second step. In this way, the second section surface 5342 and the fourth section surface 5344 may be prepared in a same process, to simplify a manufacturing process of the second movable portion 53.

Certainly, in some other embodiments, the second section surface 5342 and the fourth section surface 5344 may alternatively not be on a same plane, provided that the height of the first step and the height of the second step satisfy that minimum space required for deformation of the first elastic member 55 is reserved.

In this embodiment of this application, the third section surface 5343 is recessed toward a side that is of the second plane and that is away from the first plane, to form a support groove, so as to support the first fulcrum element 514 of the first movable portion 51, so that the first fulcrum element 514 rotates around a Y-axis under support and limiting of the third section surface 5343. In other words, the support groove is provided in a region that is on the bearing table 534 and that corresponds to the first fulcrum element 514, and is configured to support the first fulcrum element 514.

In some embodiments, the third section surface 5343 may be a V-shaped surface or an arc surface. In other words, the support groove mentioned above may be a V-shaped groove or an arc-shaped groove. For example, if the third section surface 5343 is an arc surface, the third section surface 5343 may adapt to a shape of the first arc surface 5141 of the first fulcrum element 514.

In some embodiments, similarly to the first support portion 531, the bearing table 534 may also be disposed on a side that is of the second support portion 532 and that faces the first support portion 531. The bearing table 534 disposed on the first support portion 531 and the bearing table 534 disposed on the second support portion 532 are symmetrical.

In other words, the voice coil motor 5 may include two first fulcrum elements 514, one of the two first fulcrum elements 514 is disposed on a side that is of the first side wall 512 and that faces the first support portion 531, the bearing table 534 is disposed on a side that is of the first support portion 531 and that faces the first side wall 512, and the first fulcrum element 514 on the first side wall 512 is borne by the bearing table 534 on the first support portion 531; and the other of the two first fulcrum elements 514 is disposed on a side that is of the second side wall 513 and that faces the second support portion 532, the bearing table 534 is disposed on a side that is of the second support portion 532 and that faces the second side wall 513, and the first fulcrum element 514 on the second side wall 513 is borne by the bearing table 534 on the second support portion 532.

In some other embodiments, correspondingly to a case in which the second protrusion is disposed on the second side wall 513, the bearing table 534 disposed on the second support portion 532 may not be provided with structures of the second section surface 5342, the third section surface 5343, and the fourth section surface 5344 shown in FIG. 8, but the second section surface 5342, the third section surface 5343, and the fourth section surface 5344 are disposed on a same plane, and the plane is recessed in a negative direction of the X-axis relative to the first plane on which the first section surface 5341 and the fifth section surface 5345 are located, to reserve space for deformation of the first elastic member 55. In this case, the plane is not in contact with the first fulcrum element 514 either.

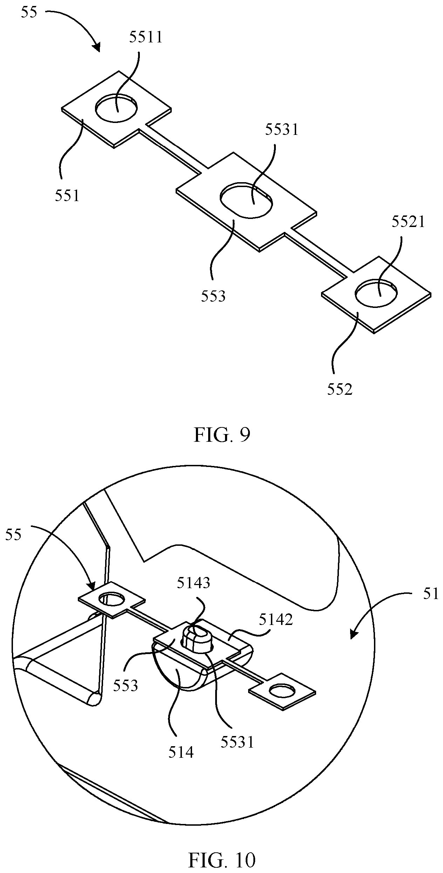

FIG. 9 is a diagram of a structure of the first elastic member 55 in FIG. 6.

In this embodiment of this application, the first elastic member 55 may include a first connection portion, a second connection portion, and a deformation portion located between the first connection portion and the second connection portion, the first connection portion is fastened to the first fulcrum element 514, and the second connection portion is fastened to the bearing table 534.

For example, as shown in FIG. 9, the first elastic member 55 includes a first end 551, a second end 552, and a connection end 553 located between the first end 551 and the second end 552. The first end 551 and the second end 552 are configured to fasten to the second movable portion 53, and the connection end 553 is configured to connect to (for example, fasten to or abut against) the first movable portion 51. A part that is of the first elastic member 55 and that is other than the first end 551, the second end 552, and the connection end 553 has a small width and large flexibility, and may be elastically deformed under an action of a force. Herein, the connection end 553 is an example of the first connection portion, and the first end 551 and the second end 552 are an example of the second connection portion. A part between the first end 551 and the connection end 553 and a part between the second end 552 and the connection end 553 are an example of the deformation portion.

It may be understood that the first elastic member 55 may alternatively be of another structure. For ease of understanding and description, the following uses an example in which the first elastic element 55 is of the structure shown in FIG. 9 for description. However, this application is not limited thereto.

In some embodiments, the connection end 553 may be provided with a first through hole 5531, and the first through hole 5531 is configured to fit the first locating pin 5143 on the first movable portion 51, to limit a relative location between the first elastic member 55 and the first movable portion 51 and a motion of the first movable portion 51.

In some embodiments, the first end 551 may be provided with a second through hole 5511, the second end 552 may be provided with a third through hole 5521, and the second through hole 5511 and the third through hole 5521 are used to respectively fit the second locating pin 5346 and the third locating pin 5347 on the second movable portion 53, to limit a relative location between the first elastic member 55 and the second movable portion 53.

In other words, a first through hole (for example, the first through hole 5531) is provided on the first connection portion, a first locating pin (for example, the first locating pin 5143) is disposed on a surface that is of the first fulcrum element 514 and that is fastened to the first connection portion, and the first elastic member 55 is sleeved on the first locating pin through the first through hole. A second through hole (for example, the second through hole 5511 or the third through hole 5521) is provided on the second connection portion, a second locating pin (for example, the second locating pin 5346 or the third locating pin 5347) is disposed on a surface that is of the bearing table 534 and that is fastened to the second connection portion, and the first elastic member 55 is sleeved on the second locating pin through the second through hole.

As an example instead of a limitation, the first elastic member 55 may be a spring plate.

The foregoing separately describes example structures of the first movable portion 51, the second movable portion 53, and the first elastic member 55 with reference to FIG. 7 to FIG. 9. The following describes a connection relationship between the first movable portion 51, the second movable portion 53, and the first elastic member 55 in an assembly state with reference to FIG. 10 to FIG. 12.

FIG. 10 is an assembly diagram of the first elastic member 55 and the first movable portion 51.

As shown in FIG. 10, for example, the first fulcrum element 514 includes the first locating pin 5143, and the connection end 553 on the first elastic member 55 is provided with the first through hole 5531. The connection end 553 is sleeved on the first locating pin 5143 through the first through hole 5531. Specifically, the connection end 553 is in contact with the connection surface 5142 of the first fulcrum element 514.

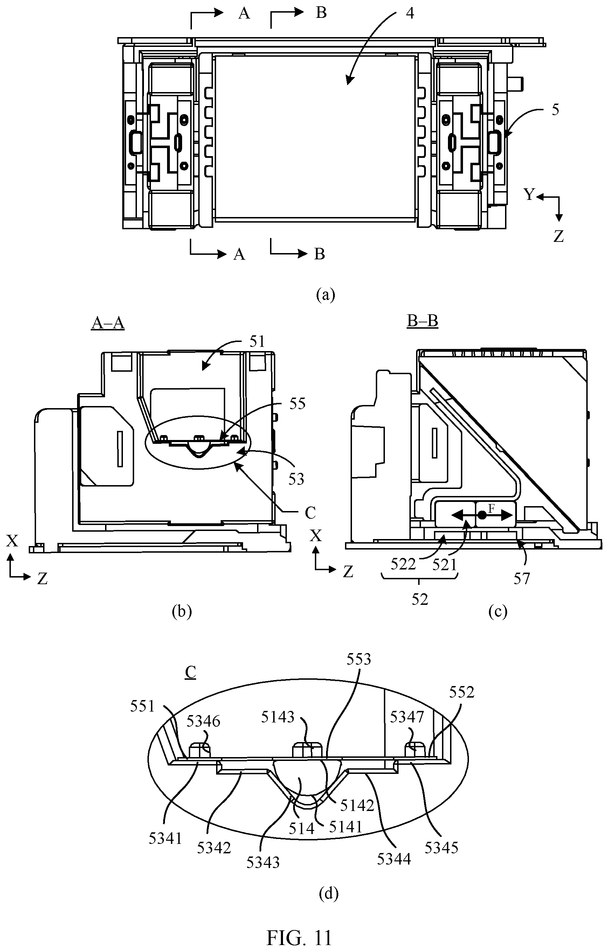

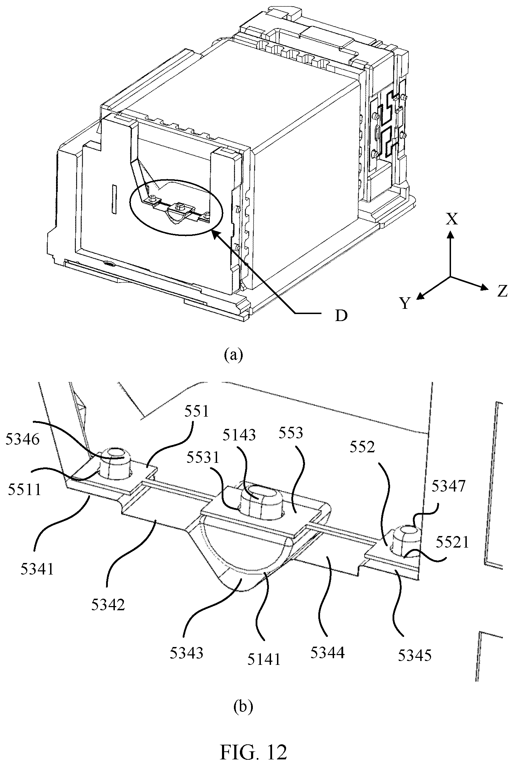

FIG. 11 is a schematic cross-sectional view of the first elastic member 55, the first movable portion 51, and the second movable portion 53 in an assembly state. (a) in FIG. 11 is a projection diagram of the voice coil motor 5 and the optical element 4 on a plane YZ in the assembly state. (b) in FIG. 11 is a schematic cross-sectional view of (a) in FIG. 11 that is cut at A-A, where the schematic cross-sectional view is mainly used to show a connection relationship between the first elastic member 55, the first movable portion 51, and the second movable portion 53. (c) in FIG. 11 is a schematic cross-sectional view of (a) in FIG. 11 that is cut at B-B, where the schematic cross-sectional view is mainly used to show a location relationship between components of the first actuating portion 52 configured to drive the optical element 4 to rotate around a Y-axis. (d) in FIG. 11 is a partial enlarged diagram C of (b) in FIG. 11. For ease of understanding, FIG. 12 is a schematic three-dimensional sectional view and a partial enlarged diagram of the first elastic member 55, the first movable portion 51, and the second movable portion 53 in an assembly state.

As shown in FIG. 11 and FIG. 12, in the assembly state, the first end 551 of the first elastic member 55 is fastened to the first section surface 5341 of the second movable portion 53, and the second end 552 of the first elastic member 55 is fastened to the fifth section surface 5345 of the second movable portion 53, so that the first elastic member 55 is fastened to the second movable portion 53.

The connection end 553 of the first elastic member 55 is fastened to the first fulcrum element 514 of the first movable portion 51, so that the first elastic member 55 is fastened to the first movable portion 51. A part between the first end 551 and the connection end 553 and a part between the second end 552 and the connection end 553 may be elastically deformed, so that the first movable portion 51 can move relative to the second movable portion 53.

In some embodiments, if the second locating pin 5346 is disposed on the first section surface 5341, the third locating pin 5347 is disposed on the fifth section surface 5345, the second through hole 5511 is provided at the first end 551, and the third through hole 5521 is provided at the second end 552, the first end 551 is sleeved on the second locating pin 5346 through the second through hole 5511, and the second end 552 is sleeved on the third locating pin 5347 through the third through hole 5521. In this way, a relative location relationship between the first elastic member 55 and the second movable portion 53 may be limited through fit between the second locating pin 5346 and the second through hole 5511 and fit between the third locating pin 5347 and the third through hole 5521, to position the first elastic member 55. In this way, assembly is convenient; and in addition, when a fixed connection relationship between the first elastic member 55 and the second movable portion 53 partially or completely fails, the first elastic member 55 may not be detached from the bearing table 534 between the second rotations 53, so that location stability of the first elastic member 55 can be improved.

The first fulcrum element 514 of the first movable portion 51 is borne on the third section surface 5343 of the second movable portion 53, that is, the first movable portion 51 is borne on an inner wall of a support groove through the first arc surface 5141. The third section surface 5343 is a V-shaped surface or an arc surface, and can adapt to the first arc surface 5141 of the first fulcrum element 514, so that the first fulcrum element 514 can rotate around the Y-axis on the third section surface 5343. Because the first fulcrum element 514 rotates on the third section surface 5343, a rotation center of the first fulcrum element 514 (that is, a rotation center of the first movable portion, or a rotation center of the first movable portion 51 and the optical element 4 in a connected state) coincides with a center of mass of the first movable portion 51 and the optical element 4 that are fastened to each other (that is, a center of mass of the first movable portion 51 and the optical element 4 in a connected state). In other words, the center of mass of the first movable portion 51 and the optical element 4 that are fastened to each other is located on a rotation central line of the first fulcrum element 514. In this way, when the first elastic member 55 is elastically deformed, the first elastic member 55 is deformed in a relatively fixed direction, instead of being deformed in any direction without a constraint. This reduces impact of an interference torque, and can reduce or avoid movement or rotation of the voice coil motor (or the first movable portion 51, or the optical element 4) in an undesired motion direction, so that an anti-interference capability of the motor is improved, and imaging quality is improved.

In some embodiments, if the first locating pin 5143 is disposed on the first fulcrum element 514, and the first through hole 5531 is provided at the connection end 553, the connection end 553 is sleeved on the first locating pin 5143 through the first through hole 5531. A relative location relationship between the first elastic member 55 and the first movable portion 51 may be limited through fit between the first through hole 5531 and the first locating pin 5143, to position the first movable portion 51. In this way, assembly is convenient; and in addition, when a fixed connection relationship between the first elastic member 55 and the first movable portion 51 partially or completely fails, the first elastic member 55 may not be detached from the first fulcrum element 514 of the first movable portion 51, so that location stability of the first movable portion 51 can be improved.

In this embodiment of this application, the first arc surface 5141 of the first fulcrum element 514 is in contact with at least a part of the third section surface 5343. Therefore, a friction between the first arc surface 5141 and the third section surface 5343 can reduce or avoid movement of the optical element 4 in a Y-axis direction, that is, reduce or avoid movement of the voice coil motor in the Y-axis direction. In this way, interference caused by a degree of freedom in an undesired motion direction to a shake compensation process of the voice coil motor can be reduced, and image stabilization effect of the voice coil motor can be improved.

In some embodiments, in the assembly state, there is a first preset distance in a direction X between a surface that is of the first fulcrum element 514 and that is fastened to the first connection portion and a surface that is of the bearing table 534 and that is fastened to the second connection portion, and the first preset distance is used by the first elastic member 55 to apply a first pre-pressure to the first fulcrum element 514. In other words, in an X-axis direction, there is a first preset distance between a surface (for example, the connection surface 5142) on which the first fulcrum element 514 is in contact with the first elastic member 55 and a surface (for example, the first section surface 5341 or the fifth section surface 5345) on which the second movable portion 53 is in contact with the first elastic member 55, where the surface that is of the first fulcrum element 514 and that is in contact with the first elastic member 55 is closer to a positive direction of an X-axis. The first preset distance is set, so that the first elastic member 55 is bent to some extent in the assembly state. The bending may apply the first pre-pressure to the first fulcrum element 514, so that the first fulcrum element 514 abuts against the third section surface 5343. In this way, the friction between the first arc surface 5141 and the third section surface 5343 can be increased, and movement of the optical element 4 in the Y-axis direction can be further reduced; and in addition, the first pre-pressure may limit movement of the optical element 4 driven by the first movable portion 51 in the X-axis direction, to reduce a degree of freedom of the optical element 4 in an undesired motion direction. In addition, due to the first pre-pressure, a location difference of the first movable portion 51 in different postures of the compact camera module can be reduced, to reduce a sensitivity difference in different postures, so as to improve image stabilization effect.

As shown in (c) in FIG. 11, the first actuating portion 52 includes the first magnet 521 and the first coil 522 that are disposed opposite to each other in the X-axis direction. The first magnet 521 is fastened to the first movable portion 51, and the first coil 522 is fastened to the fastening portion 57. After the first coil 522 is powered on, under an action of a magnetic field of the first coil 522, the first magnet 521 is subject to an action force F shown in a direction of an arrow in the figure. Under the action force, the first magnet 521 drives the first movable portion 51 to rotate around the Y-axis by using the first fulcrum element 514 as a fulcrum.

As mentioned in descriptions of FIG. 6, the second movable portion 53 is connected to the fastening portion 57. The following provides more detailed descriptions with reference to the accompanying drawings.

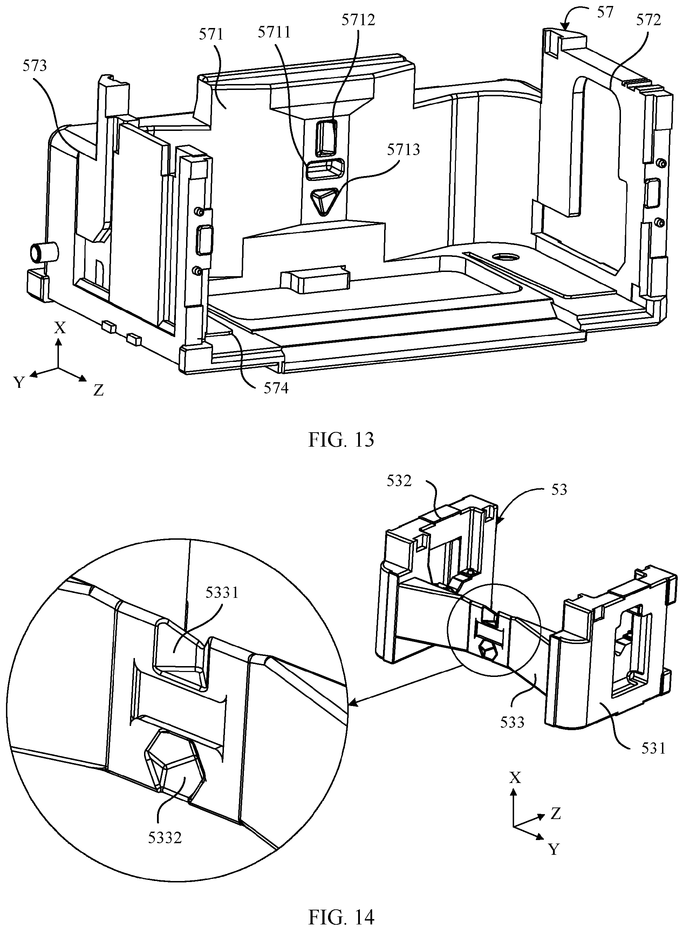

FIG. 13 is a diagram of a structure of the fastening portion 57 in FIG. 6.

As shown in FIG. 13, the fastening portion 57 may include a bottom wall 574 and a third side wall 571, a fourth side wall 572, and a fifth side wall 573 that extend from edges of the bottom wall 574 in a positive direction of an X-axis. The fourth side wall 572 and the fifth side wall 573 are disposed opposite to each other in a Y-axis direction, and two ends of the third side wall 571 in the Y-axis direction are respectively connected to the fourth side wall 572 and the fifth side wall 573. The third side wall 571 is further configured to movably connect to the second movable portion 53.

All walls of the fastening portion 57 forms second accommodation space, and the second accommodation space is used to accommodate the second movable portion 53, the first movable portion 51, and the optical element 4.

FIG. 14 is a diagram of a structure and a partial enlarged diagram of the second movable portion 53 in FIG. 6.

As shown in FIG. 14, the second movable portion 53 includes the first support portion 531, the second support portion 532, and the third support portion 533. The first support portion 531 and the second support portion 532 are disposed opposite to each other in a Y-axis direction, and two ends of the third support portion 533 in the Y-axis direction are respectively connected to the first support portion 531 and the second support portion 532. The third support portion 533 is configured to movably connect to the fastening portion 57. In an assembly state, the third support portion 533 is disposed opposite to the third side wall 571 of the fastening portion 57.

In this embodiment of this application, the second movable portion 53 is movably connected to the fastening portion 57 through fit between a protrusion and a groove or fit between a ball and grooves.

For example, as shown in FIG. 13, the first groove 5711, a second groove 5712, and a third groove 5713 are provided on a side that is of the third side wall 571 and that faces the third support portion 533, and the second groove 5712 and the third groove 5713 are disposed on two sides of the first groove 5711 in a direction X. The second groove 5712 and the third groove 5713 are in a same straight line. Alternatively, it may be understood that a projection of a center line of the second groove 5712 in the direction X on a plane XY coincides with a projection of a center line of the third groove 5713 in the direction X on the plane XY.

As shown in FIG. 14, a fourth groove 5331 and a fifth groove 5332 are disposed on a side that is of the third support portion 533 and that faces the third side wall 571, and the fourth groove 5331 and the fifth groove 5332 are in a same straight line. In other words, it may be understood that a projection of a center line of the fourth groove 5331 in the direction X on the plane XY coincides with a projection of a center line of the fifth groove 5332 in the direction X on the plane XY. In the assembly state, the fourth groove 5331 is disposed opposite to the second groove 5712, and the fifth groove 5332 is disposed opposite to the third groove 5713.

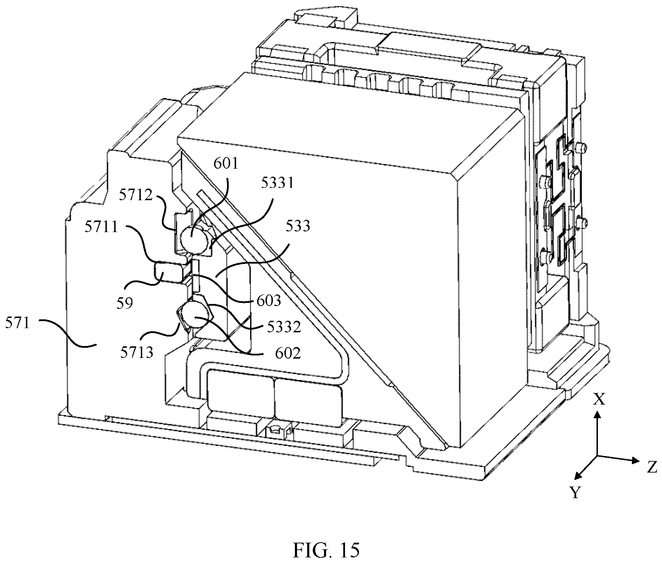

FIG. 15 is a schematic sectional view of the second movable portion 53 and the fastening portion 57 in an assembly state.

In some embodiments, as shown in FIG. 15, a cavity enclosed by the fourth groove 5331 and the second groove 5712 in the assembly state is configured to accommodate a first ball 601. A part of the first ball 601 is located in the fourth groove 5331, and a part of the first ball 601 is located in the second groove 5712. A cavity enclosed by the fifth groove 5332 and the third groove 5713 in the assembly state is configured to accommodate a second ball 602. A part of the second ball 602 is located in the fifth groove 5332, and a part of the second ball 602 is located in the third groove 5713.

The first ball 601 may be fastened to the fourth groove 5331 or the second groove 5712. The second ball 602 may be fastened to the fifth groove 5332 or the third groove 5713.

The first ball 601 is used as an example. For example, as shown in FIG. 15, a first hemispherical surface of the first ball 601 may be fastened to the fourth groove 5331 through an adhesive or the like, and a part of a second hemispherical surface of the first ball 601 is in contact with a part of an inner wall of the second groove 5712. Certainly, it may be understood that, in some other embodiments, a first hemispherical surface of the first ball 601 may be fastened to the second groove 5712 through an adhesive or the like, a part of a second hemispherical surface of the first ball 601 is in contact with a part of an inner wall of the fourth groove 5331. This is not limited in embodiments of this application.

After a pre-pressure is applied between the second movable portion 53 and the fastening portion 57, the fourth groove 5331 and the second groove 5712 clamp the first ball 601, and the fifth groove 5332 and the third groove 5713 clamp the second ball 602. Under constraint impact of the fourth groove 5331 and the second groove 5712 on the first ball 601 and constraint impact of the fifth groove 5332 and the third groove 5713 on the second ball 602, a connection line between a sphere center (or a center of mass, or a center) of the first ball 601 and a sphere center (or a center of mass, or a center) of the second ball 602 is parallel to an X-axis direction. Movable connection between the second movable portion 53 and the fastening portion 57 may be implemented through sliding between the first ball 601 and a surface of a groove (for example, the second groove 5712) and sliding between the second ball 602 and a surface of a groove (for example, the third groove 5713). Under driving of the second actuating portion 54, the second movable portion 53 may rotate around an X-axis relative to the fastening portion 57. It may be understood that a rotation center line of the second movable portion 53 coincides with the connection line between the sphere center of the first ball 601 and the sphere center of the second ball 602.

**In** this embodiment of this application, the second movable portion 53 has two fulcrums in the X-axis direction, and the second groove 5712 and the third groove 5713 have limiting impact on the first ball 601 and the second ball 602 in a direction Y, so that stability of rotation around the X-axis can be improved, and rotation of the optical element 4 around a Z-axis can be reduced or avoided, that is, rotation of the voice coil motor around the Z-axis can be reduced or avoided. **In** this way, a degree of freedom of the optical element 4 in an undesired motion direction is reduced, so that interference caused by the degree of freedom in the undesired motion direction to a shake compensation process of the voice coil motor can be reduced, and image stabilization effect of the voice coil motor can be improved. **In** addition, the two fulcrums of the second movable portion 53 in the X-axis direction may disperse impact, to avoid impact of impact deformation, existing when a single ball is used, on the image stabilization effect.

**In** some embodiments, both the second groove 5712 and the third groove 5713 may be V-shaped grooves. The second groove 5712 is used as an example. To be specific, a section of the second groove 5712 in a plane YZ is V-shaped, or an extension direction of the V-shaped groove is parallel to the X-axis direction. Two side surfaces of the V-shaped groove may be in contact with a ball, are configured to support the ball, and may suppress rotation of the second movable portion 53 around the Z-axis in a process in which the second movable portion 53 rotates around the X-axis.

**In** some embodiments, both the second groove 5712 and the third groove 5713 may be taper grooves, for example, one type of conical grooves, round table grooves, and prism-cone grooves. The second groove 5712 is used as an example. To be specific, a section area of the second groove 5712 in a plane XY gradually decreases in a negative direction of the Z-axis, or side walls of the second groove 5712 gradually approaches in the negative direction of the Z-axis. A side wall of the taper groove may position a ball (for example, the first ball 601 or the second ball 602), that is, the ball cannot move linearly in the taper groove in a direction X or a direction Y. **In** this way, a relative location relationship between the second movable portion 53 and the fastening portion 57 can be limited, and movement of the optical element 4 in the direction X and movement of the optical element 4 in the direction Y can be reduced or avoided, to reduce the degree of freedom of the optical element 4 in the undesired motion direction.

In some embodiments, one of the second groove 5712 and the third groove 5713 is a taper groove, and the other is a V-shaped groove. In this way, the ball can be positioned through the taper groove, to reduce the degree of freedom of the optical element 4 in the undesired motion direction, and a mounting error may be absorbed through the V-shaped groove, to reduce assembly difficulty.

It may be understood that the foregoing groove type disposition manner of the second groove 5712 and the third groove 5713 is based on that the ball is fastened to the second movable portion 53. In some other embodiments, when the ball is fastened to the fastening portion 57, the foregoing groove type disposition manner is applicable to the fourth groove 5331 and the fifth groove 5332 on the third support portion 533, in other words, the fourth groove 5331 or the fifth groove 5332 is one of a taper groove or a V-shaped groove. For brevity, details are not described again.

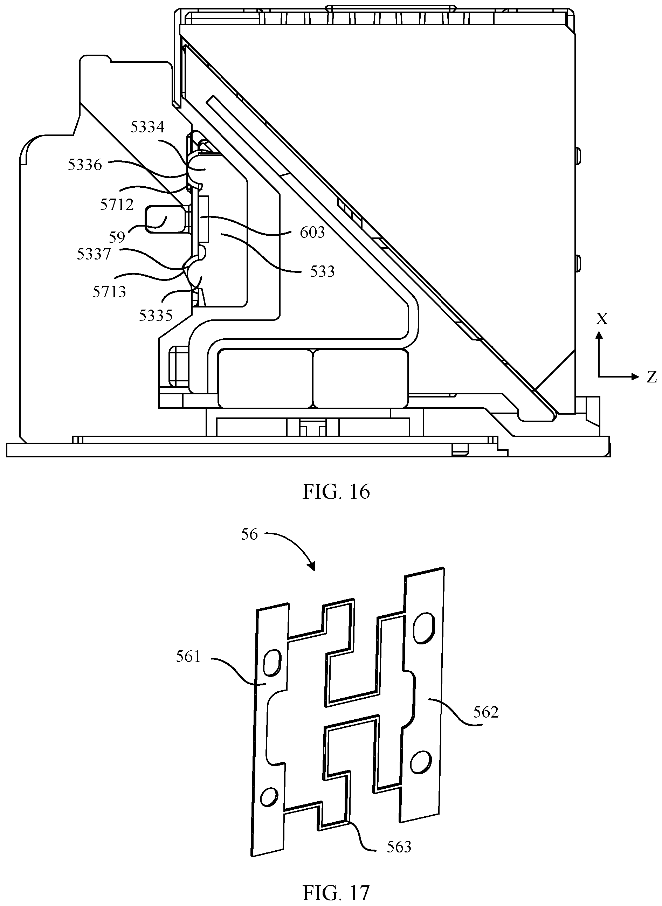

The foregoing mainly describes, with reference to FIG. 15, a manner in which the second movable portion 53 and the fastening portion 57 are movably connected through fit between the ball and the grooves. The following describes, with reference to FIG. 16, a manner in which the second movable portion 53 and the fastening portion 57 are movably connected through fit between a protrusion and a groove.

FIG. 16 is a schematic cross-sectional view of the second movable portion 53 and the fastening portion 57 in an assembly state.

As shown in FIG. 16, the fourth groove 5331 and the fifth groove 5332 shown in FIG. 14 may not be provided on the third support portion 533, but a third protrusion 5334 and a fourth protrusion 5335 are disposed on a side that is of the third support portion 533 and that faces the fastening portion 57, and the third protrusion 5334 and the fourth protrusion 5335 are disposed in an X-axis direction. The third protrusion 5334 is accommodated in the second groove 5712, and the fourth protrusion 5335 is accommodated in the third groove 5713. Herein, a surface that is of the third protrusion 5334 and that is in contact with the second groove 5712 is an arc surface, and a surface that is of the fourth protrusion 5335 and that is in contact with the third groove 5713 is an arc surface.

In other words, the third protrusion 5334 includes a second arc surface 5336, the fourth protrusion 5335 includes a third arc surface 5337, the second arc surface 5336 is in contact with an inner wall of the second groove 5712, and the third arc surface 5337 is in contact with an inner wall of the third groove 5713. When the second movable portion 53 rotates around an X-axis, the second arc surface 5336 slides relative to the inner wall of the second groove 5712, and the third arc surface 5337 slides relative to the inner wall of the third groove 5713.

In some embodiments, a connection line between a center (or a sphere center) of the second arc surface 5336 and a center (or a sphere center) of the third arc surface 5337 is parallel to the X-axis. A rotation center line of the second movable portion 53 coincides with the connection line between the center of the second arc surface 5336 and the center of the third arc surface 5337.

Certainly, it may be understood that, in some other embodiments, the fourth groove 5331 and the fifth groove 5332 shown in FIG. 14 are disposed on the third support portion 533, and the third protrusion 5334 and the fourth protrusion 5335 shown in FIG. 16 may be disposed on a side that is of the fastening portion 57 and that faces the second movable portion 53. In other words, locations of the protrusions and the grooves are interchanged, and the second movable portion 53 and the fastening portion 57 can still be movably connected.

In some embodiments, the third protrusion 5334 and the fourth protrusion 5335 may be integrally formed with the third support portion 533.

In some embodiments, materials of the third protrusion 5334 and the fourth protrusion 5335 may be plastic materials. In this way, when the second movable portion 53 rotates around the X-axis, a friction between the third protrusion 5334 and an inner wall of the second groove 5712 and a friction between the fourth protrusion 5335 and an inner wall of the third groove 5713 can be reduced.

In some embodiments, lubricant oil may be applied to the inner wall of the second groove 5712 and the inner wall of the third groove 5713, to reduce frictions.

In conclusion, one of the second movable portion 53 and the fastening portion 57 is a first component, and the other is a second component. The first component is provided with a second fulcrum element (for example, the first ball 601 or the third protrusion 5334) and a third fulcrum element (for example, the second ball 602 or the fourth protrusion 5335) that are arranged in the X-axis direction, the second fulcrum element and the third fulcrum element are fastened to the second component, the second fulcrum element includes a second arc surface (for example, a spherical surface of the first ball 601 or the second arc surface 5336 on the fourth protrusion 5335), and the third fulcrum element includes a third arc surface (for example, a spherical surface of the second ball 602 or the third arc surface 5337 on the third protrusion 5334). A second groove (for example, the second groove 5712) and a third groove (for example, the third groove 5713) that are arranged in the X-axis direction are provided on the second component, the second groove is used to accommodate at least a part of the second fulcrum element, an inner wall of the second groove is in contact with the second arc surface, the third groove is used to accommodate at least a part of the third fulcrum element, and an inner wall of the third groove is in contact with the third arc surface. When the second actuating portion 54 drives the second movable portion 53 to rotate around the X-axis direction, the second arc surface borne by the inner wall of the second groove, and the third arc surface borne by the inner wall of the third groove, to limit rotation of the second movable portion 53 around a Z-axis direction.

In some embodiments, a connection line between a rotation center of the second arc surface and a rotation center of the third arc surface is parallel to the X-axis direction.

As described above, in some embodiments, the second fulcrum element and the third fulcrum element are balls. Alternatively, the second fulcrum element and the third fulcrum element are protrusions that are of the first component and that extend towards the second component.

In this embodiment of this application, to prevent the second movable portion 53 from being detached from the fastening portion 57, a pre-pressure needs to be provided between the second movable portion 53 and the fastening portion 57.

In some embodiments, the pre-pressure between the second movable portion 53 and the fastening portion 57 may be provided in a magnetic attraction manner.

As shown in FIG. 15 and FIG. 16, the first groove 5711 that is disposed on the third side wall 571 and that is located between the second groove 5712 and the third groove 5713 is used to accommodate the third magnet 59, for example, the third magnet 59 is fastened to the first groove 5711. A magnetic conductive member 603 is disposed in a region that is of the third support portion 533 and that faces the first groove 5711. The pre-pressure between the second movable portion 53 and the fastening portion 57 may be provided by a magnetic attraction force between the third magnet 59 and the magnetic conductive member 603. In other words, the magnetic attraction force between the third magnet 59 and the magnetic conductive member 603 is used to apply a pre-pressure to the second fulcrum element and the third fulcrum element.

In some embodiments, a pre-pressing state between the second movable portion 53 and the fastening portion 57 may be changed by adjusting a magnetic force of the third magnet 59, so that iterative evolution of a motor architecture can be implemented.

In some embodiments, the pre-pressure between the second movable portion 53 and the fastening portion 57 may be provided through elastic deformation of an elastic member.

FIG. 17 is a diagram of a structure of the second elastic member 56 according to an embodiment of this application. As shown in FIG. 17, the second elastic member 56 includes a third end 561, a fourth end 562, and a cantilever 563 located between the third end 561 and the fourth end 562. The third end 561 (or referred to as a third connection portion) is configured to fasten to the fastening portion 57, and the fourth end 562 (or referred to as a fourth connection portion) is configured to fasten to the second movable portion 53. The cantilever 563 has a small width and large flexibility, and may be elastically deformed under an action of a force.

In this embodiment of this application, there is a second preset distance in a Z-axis direction between a surface that is of the fastening portion 57 and that is fastened to the third end 561 and a surface that is of the second movable portion 53 and that is fastened to the fourth end 562, and the second preset distance is used by the second elastic member 56 to apply a pre-pressure to a second fulcrum element and a third fulcrum element.

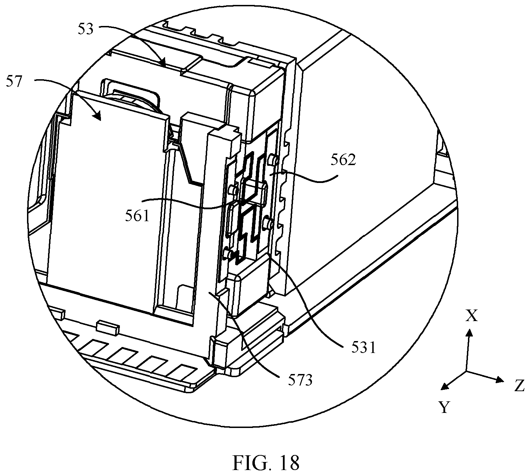

For example, FIG. 18 is a partial enlarged diagram of the second movable portion 53 and the fastening portion 57 in an assembly state. As shown in FIG. 18, for example, the second elastic member 56 is connected to the first support portion 531 of the second movable portion 53 and the fifth side wall 573 of the fastening portion 57. The third end 561 of the second elastic member 56 is fastened to an end face that is of the fifth side wall 573 and that is in a positive direction of a Z-axis, and the fourth end 562 of the second elastic member 56 is fastened to an end face that is of the first support portion 531 and that faces the positive direction of the Z-axis. There is a second preset distance in a Z-axis direction between the end face that is of the first support portion 531 and that faces the positive direction of the Z-axis and the end face that is of the fifth side wall 573 and that faces the positive direction of the Z-axis. The end face that is of the first support portion 531 and that faces the positive direction of the Z-axis is closer to the positive direction of the Z-axis. The second preset distance is set, so that the second elastic member 56 is deformed to some extent in the assembly state. The deformation may apply a second pre-pressure to the second movable portion 53, so that the third support portion 533 of the second movable portion 53 abuts against the fastening portion 57 at a fulcrum. **In** addition, due to the second pre-pressure, a location difference of the second movable portion 52 in different postures of the compact camera module can be reduced, to reduce a sensitivity difference in different postures, so as to improve image stabilization effect.

**In** some embodiments, a pre-pressing state between the second movable portion 53 and the fastening portion 57 may be changed by adjusting the second preset distance, so that iterative evolution of a motor architecture can be implemented.

**In** some embodiments, the voice coil motor 5 may include two second elastic elements 56. An end face that is of the fourth side wall 572 and that is away from the third side wall 571 in the Z-axis direction is connected to an end face that is of the second support portion 532 and that is away from the third support portion 533 in the Z-axis direction through one of the two second elastic elements 56, and an end face that is of the fifth side wall 573 and that is away from the third side wall 571 in the Z-axis direction is connected to an end face that is of the first support portion 531 and that is away from the third support portion 533 in the Z-axis direction through the other of the two second elastic elements 56.

It may be understood that the second support portion 532 of the second movable portion 53 may alternatively be connected to the fourth side wall 572 of the fastening portion 57 through the second elastic member 56. In this way, a pre-pressure is applied to a symmetrical portion of the second movable portion 53, so that stability of the architecture can be improved.

As an example instead of a limitation, the second elastic element 56 may be a spring plate.

In some embodiments, the pre-pressure between the second movable portion 53 and the fastening portion 57 may be obtained by combining a magnetic attraction manner and an elastic deformation manner of the elastic member, so that it can be ensured that the pre-pressing state between the second movable portion 53 and the fastening portion 57 is adjustable, and reliability of applying the pre-pressure can be improved.

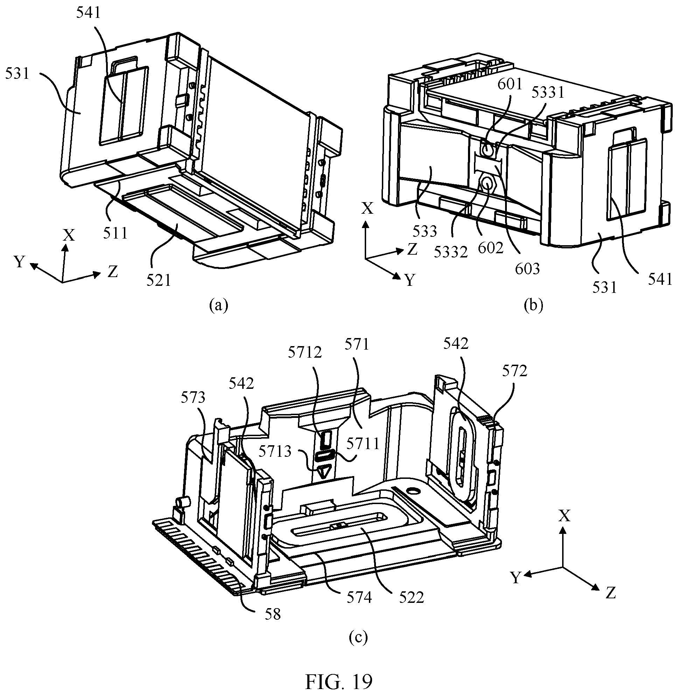

FIG. 19 is an assembly diagram of an optical image stabilization assembly according to an embodiment of this application.

As an example instead of a limitation, as shown in (a), (b), and (c) in FIG. 19, the first actuating portion 52 configured to drive the first movable portion 51 to rotate around a Y-axis includes the first magnet 521 and the first coil 522, the first coil 522 may be fastened to the bottom wall 574 of the fastening portion 57, the first magnet 521 may be fastened to the first body 511 of the first movable portion 51, and the first magnet 521 is disposed opposite to the first coil 522.

The second actuating portion 54 configured to drive the second movable portion 51 to rotate around an X-axis includes two groups of second magnets 541 and second coils 542. The two second coils 542 may be respectively fastened to the fourth side wall 572 and the fifth side wall 573 of the fastening portion 57, the two second magnets 541 may be respectively fastened to the first support portion 531 and the second support portion 532 of the second movable portion 53, and the second magnet 541 and the second coil 542 in a same group are disposed opposite to each other.

A pivot portion configured to implement movable connection between the second movable portion 51 and the fastening portion 57 may include the first ball 601 and the second ball 602. A part of the first ball 601 is fastened to the fourth groove 5331 of the third support portion 533, and a part that is of the first ball 601 and that is exposed outside the fourth groove 5331 may be accommodated in the second groove 5712 provided on the third side wall 571, and is supported by an inner wall of the second groove 5712. A part of the second ball 602 is fastened to the fifth groove 5332 of the third support portion 533, and a part that is of the second ball 602 and that is exposed outside the fifth groove 5332 may be accommodated in the third groove 5713 provided on the third side wall 571, and is supported by an inner wall of the third groove 5713.

When a pre-pressure is applied between the second movable portion 53 and the fastening portion 57, the third magnet 59 is fastened to the first groove 5711 provided on the third side wall 571. The magnetic conductive member 603 is disposed in a region that is on the third support portion 533 and that corresponds to the first groove 5711. The third magnet 59 and the magnetic conductive member 603 are attracted to each other under an action of a magnetic force.

It should be noted that, in embodiments of this application, to reduce a degree of freedom of a voice coil motor in an undesired motion direction, a degree of freedom of the first movable portion 51 may be limited through fit between an arc surface and a support groove, and/or a degree of freedom of the second movable portion 53 is limited through fit between two fulcrum elements and two grooves. In other words, the voice coil motor provided in embodiments of this application may have the structures described in FIG. 7 to FIG. 12, and/or have the structures described in FIG. 13 to FIG. 19. This is not limited in this application.

In an optical image stabilization assembly provided in embodiments of this application, the voice coil motor 5 drives, through the first movable portion 51, the optical element 4 to rotate around a Y-axis, and drives, through the second movable portion 53, the optical element 4 to rotate around an X-axis, and a degree of freedom that is of the optical element 4 and that rotates around the X-axis is decoupled from a degree of freedom that is of the optical element 4 and that rotates around the Y-axis, so that when the voice coil motor 5 performs shake compensation in a direction X or a direction Y, motion cross interference to the other direction is reduced, and image stabilization effect is improved.

It may be understood that, because the first movable portion is fastened to the optical element and the first movable portion drives the optical element to move, rotation or movement of the first movable portion may be replaced with rotation or movement of the optical element. Because the second movable portion is connected to the first movable portion and the second movable portion drives the first movable portion to move, rotation or movement of the second movable portion may be replaced with rotation or movement of the first movable portion, or rotation or movement of the optical element. In addition, a motion of the optical element, a motion of the first movable portion, and a motion of the second movable portion all may be considered as a motion of the voice coil motor.

When a structure of a periscope compact camera module provided in embodiments of this application is applied to an electronic device, the electronic device can be made lighter, thinner, and smaller. In addition, because the periscope compact camera module does not need to protrude from a body of the electronic device, a protruding part of the compact camera module may not be easily damaged due to an accident during image shooting.

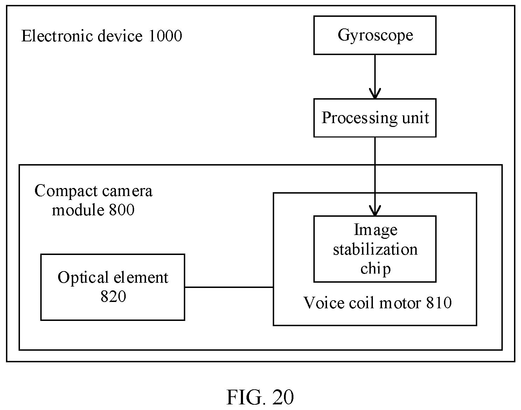

An embodiment of this application further provides an electronic device 1000. FIG. 20 is a diagram of a control principle of the electronic device 1000 according to this application.

As shown in FIG. 20, the electronic device 1000 includes a gyroscope, a processing unit, and a compact camera module 800. The compact camera module 800 includes a voice coil motor 810 and an optical element 820. The gyroscope is configured to collect shake information of the electronic device 1000, and send the shake information to the processing unit. The processing unit is configured to control the voice coil motor 810 based on the shake information. Specifically, the voice coil motor 810 drives the optical element 820 to perform double degree of freedom rotation to perform shake compensation. In this embodiment of this application, the voice coil motor 810 may be the voice coil motor 5 described in the foregoing embodiments, and the optical element 820 may be the optical element 4 described in the foregoing embodiments.

Further, the processing unit may control the voice coil motor 810 through an image stabilization chip of the voice coil motor 810. In this case, the processing unit may calculate shake compensation information of the optical element 820 based on the shake information, and send the shake compensation information to the image stabilization chip. The image stabilization chip is configured to control a drive current of the voice coil motor 810 (that is, control a magnitude and a direction of a direct current in a coil) based on the shake compensation information, so that the voice coil motor 810 drives the optical element 820 to rotate.

The electronic device 1000 further includes a housing and a display. The gyroscope and the processing unit are disposed in the housing. The display and the compact camera module 800 are mounted on the housing. The display is configured to display an image shot by the compact camera module 800.

Optionally, the gyroscope is a micro electro mechanical system (micro electro mechanical system, MEMS) gyroscope.

Optionally, the housing may be a metal housing, for example, metal such as magnesium alloy or stainless steel. In addition, the housing may be a plastic housing, a glass housing, a ceramic housing, or the like, but is not limited thereto.

Optionally, the display may be a light emitting diode (light emitting diode, LED) display, a liquid crystal display (liquid crystal display, LCD), an organic light-emitting diode (organic light-emitting diode, OLED) display, or the like, but is not limited thereto.

Optionally, the housing may further include another component like a battery, a flash, a fingerprint recognition module, an earpiece, a circuit board, and a sensor, but is not limited thereto.

Optionally, the electronic device 1000 may be a terminal device having a video shooting or photo shooting function, for example, a mobile phone, a tablet computer, a laptop computer, a video camera, a video recorder, a camera, an intelligent robot, an in-vehicle surveillance device, or another form of device having a video shooting or photo shooting function.

Because the electronic device 1000 uses the voice coil motor 5 provided in the foregoing embodiments, the electronic device 1000 also has technical effect corresponding to that of the voice coil motor 5. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A voice coil motor, comprising:
a fastening portion;
a first movable portion, configured to fasten to an optical element, wherein the optical element is configured to adjust light incident in a first direction to be transmitted in a second direction, and the second direction is perpendicular to the first direction;
a first actuating portion, configured to drive the first movable portion to rotate around a third direction relative to the fastening portion, wherein the third direction is perpendicular to the first direction and perpendicular to the second direction;
a second movable portion, connected to the first movable portion through a first elastic member, wherein the second movable portion is configured to support the first movable portion; and
a second actuating portion, configured to drive the second movable portion to rotate around the first direction relative to the fastening portion, wherein
bearing tables are disposed on the second movable portion, the bearing table comprises a support groove, a first fulcrum element is disposed on the first movable portion, the first fulcrum element comprises a first arc surface, and the first movable portion is borne on an inner wall of the support groove through the first arc surface;
the first elastic member comprises a first connection portion, a second connection portion, and a deformation portion located between the first connection portion and the second connection portion, the first connection portion is fastened to the first fulcrum element, and the second connection portion is fastened to the bearing table; and
when the first actuating portion drives the first movable portion, the first arc surface rotates around the third direction in the support groove, to limit a deformation direction of the deformation portion.

2. The voice coil motor according to claim 1, wherein a rotation center and a center of mass of the first movable portion and the optical element in a connected state coincide.

3. The voice coil motor according to claim 1 or 2, wherein the support groove is a V-shaped groove or an arc-shaped groove.

4. The voice coil motor according to any one of claims 1 to 3, wherein there is a first preset distance in the first direction between a surface that is of the first fulcrum element and that is fastened to the first connection portion and a surface that is of the bearing table and that is fastened to the second connection portion, and the first preset distance is used by the first elastic member to apply a first pre-pressure to the first fulcrum element.

5. The voice coil motor according to any one of claims 1 to 4, wherein
a first through hole is provided on the first connection portion, a first locating pin is disposed on the surface that is of the first fulcrum element and that is fastened to the first connection portion, and the first elastic member is sleeved on the first locating pin through the first through hole; and
a second through hole is provided on the second connection portion, a second locating pin is disposed on the surface that is of the bearing table and that is fastened to the second connection portion, and the first elastic member is sleeved on the second locating pin through the second through hole.

6. The voice coil motor according to any one of claims 1 to 5, wherein a table surface of the bearing table comprises a first section surface, a second section surface, a third section surface, a fourth section surface, and a fifth section surface that are sequentially connected in the second direction;
the first section surface and the fifth section surface are located on a first plane perpendicular to the first direction, and the first section surface and the fifth section surface are used to fasten to the first connection portion;
the second section surface and the fourth section surface are located on a second plane perpendicular to the first direction, the second plane is lower than the first plane in the first direction, and a distance between the second section surface and the first plane and a distance between the fourth section surface and the first plane are used to provide deformation space for the deformation portion; and
the third section surface is recessed toward a side that is of the second plane and that is away from the first plane, to form the support groove.

7. The voice coil motor according to any one of claims 1 to 6, wherein the voice coil motor comprises two first fulcrum elements;
the first movable portion comprises a first side wall and a second side wall that are disposed opposite to each other in the third direction, the second movable portion comprises a first support portion and a second support portion that are disposed opposite to each other in the third direction, the first support portion is located on a side that is of the first side wall and that is away from the second side wall, and the second support portion is located on a side that is of the second side wall and that is away from the first side wall;
one of the two first fulcrum elements is disposed on a side that is of the first side wall and that faces the first support portion, the bearing table is disposed on a side that is of the first support portion and that faces the first side wall, and the first fulcrum element on the first side wall is borne by the bearing table on the first support portion; and
the other of the two first fulcrum elements is disposed on a side that is of the second side wall and that faces the second support portion, the bearing table is disposed on a side that is of the second support portion and that faces the second side wall, and the first fulcrum element on the second side wall is borne by the bearing table on the second support portion.

8. The voice coil motor according to any one of claims 1 to 7, wherein the first fulcrum element is a D-shaped shaft.

9. The voice coil motor according to any one of claims 1 to 8, wherein the first fulcrum element and the first movable portion are integrally formed.

10. The voice coil motor according to any one of claims 1 to 9, wherein one of the second movable portion and the fastening portion is a first component, and the other of the second movable portion and the fastening portion is a second component;
a second fulcrum element and a third fulcrum element that are arranged in the first direction are disposed on the first component, the second fulcrum element and the third fulcrum element are fastened to the second component, the second fulcrum element comprises a second arc surface, and the third fulcrum element comprises a third arc surface;
a second groove and a third groove that are arranged in the first direction are provided on the second component, the second groove is used to accommodate at least a part of the second fulcrum element, an inner wall of the second groove is in contact with the second arc surface, the third groove is used to accommodate at least a part of the third fulcrum element, and an inner wall of the third groove is in contact with the third arc surface; and
when the second actuating portion drives the second movable portion to rotate around the first direction, the second arc surface is borne by the inner wall of the second groove, and the third arc surface is borne by the inner wall of the third groove, to limit rotation of the second movable portion around the second direction.

11. The voice coil motor according to claim 10, wherein a connection line between a rotation center of the second arc surface and a rotation center of the third arc surface is parallel to the first direction.

12. The voice coil motor according to claim 10 or 11, wherein the second fulcrum element and the third fulcrum element are balls; or the second fulcrum element and the third fulcrum element are protrusions that are of the first component and that extend towards the second component.

13. The voice coil motor according to any one of claims 10 to 12, wherein
the second groove is a taper groove or a V-shaped groove; and/or
the third groove is a taper groove or a V-shaped groove.

14. The voice coil motor according to claim 13, wherein when the second groove and/or the third groove are/is a V-shaped groove, an extension direction of the V-shaped groove is parallel to the first direction.

15. The voice coil motor according to claim 13 or 14, wherein when the second groove and/or the third groove are/is a taper groove, the taper groove is used to limit movement of the second movable component in the first direction.

16. The voice coil motor according to any one of claims 10 to 15, wherein the voice coil motor further comprises a second elastic member, the second elastic member comprises a third connection portion, a fourth connection portion, and a cantilever located between the third connection portion and the fourth connection portion, the third connection portion is fastened to the fastening portion, and the fourth connection portion is fastened to the second movable portion.

17. The voice coil motor according to claim 16, wherein there is a second preset distance in the second direction between a surface that is of the fastening portion and that is fastened to the third connection portion and a surface that is of the second movable portion and that is fastened to the fourth connection portion, and the second preset distance is used by the second elastic member to apply a second pre-pressure to the second fulcrum element and the third fulcrum element.

18. The voice coil motor according to claim 16 or 17, wherein the voice coil motor comprises two second elastic elements;
the second movable portion comprises the first support portion and the second support portion that are disposed opposite to each other in the third direction, and a third support portion configured to connect the first support portion and the second support portion, and the third support portion is perpendicular to the second direction;
the fastening portion comprises a fourth side wall and a fifth side wall that are disposed opposite to each other in the third direction, and a third side wall configured to connect the fourth side wall and the fifth side wall, the third side wall is perpendicular to the second direction, the fourth side wall is located on a side that is of the second support portion and that is away from the first support portion, and the fifth side wall is located on a side that is of the first support portion and that is away from the second support portion; and
an end face that is of the fourth side wall and that is away from the third side wall in the second direction is connected to an end face that is of the second support portion and that is away from the third support portion in the second direction through one of the two second elastic elements, and an end face that is of the fifth side wall and that is away from the third side wall in the second direction is connected to an end face that is of the first support portion and that is away from the third support portion in the second direction through the other of the two second elastic elements.

19. The voice coil motor according to any one of claims 16 to 18, wherein
a first groove located between the second groove and the third groove is provided on the second component, and the first groove is used to accommodate a magnetic element; and
a magnetic conductive member located between the second fulcrum element and the third fulcrum element is disposed on the first component, and a magnetic force between the magnetic conductive member and the magnetic element is used to apply a third pre-pressure to the second fulcrum element and the third fulcrum element.

20. A voice coil motor, comprising:
a fastening portion;
a movable portion, configured to fasten to an optical element, wherein the optical element is configured to adjust light incident in a first direction to be transmitted in a second direction, and the second direction is perpendicular to the first direction; and
an actuating portion, configured to drive the movable portion to rotate around the first direction relative to the fastening portion, wherein
one of the movable portion and the fastening portion is a first component, and the other of the movable portion and the fastening portion is a second component;
a second fulcrum element and a third fulcrum element that are arranged in the first direction are disposed on the first component, the second fulcrum element and the third fulcrum element are fastened to the second component, the second fulcrum element comprises a second arc surface, and the third fulcrum element comprises a third arc surface;
a second groove and a third groove that are arranged in the first direction are provided on the second component, the second groove is used to accommodate at least a part of the second fulcrum element, an inner wall of the second groove is in contact with the second arc surface, the third groove is used to accommodate at least a part of the third fulcrum element, and an inner wall of the third groove is in contact with the third arc surface; and
when the actuating portion drives the movable portion to rotate around the first direction, the second arc surface is borne by the inner wall of the second groove, and the third arc surface is borne by the inner wall of the third groove, to limit rotation of the movable portion around the second direction.

21. The voice coil motor according to claim 20, wherein a connection line between a rotation center of the second arc surface and a rotation center of the third arc surface is parallel to the first direction.

22. The voice coil motor according to claim 20 or 21, wherein the second fulcrum element and the third fulcrum element are balls; or the second fulcrum element and the third fulcrum element are protrusions that are of the first component and that extend towards the second component.

23. The voice coil motor according to any one of claims 20 to 22, wherein
the second groove is a taper groove or a V-shaped groove; and/or
the third groove is a taper groove or a V-shaped groove.

24. The voice coil motor according to claim 23, wherein when the second groove and/or the third groove are/is a V-shaped groove, an extension direction of the V-shaped groove is parallel to the first direction.

25. The voice coil motor according to claim 23 or 24, wherein when the second groove and/or the third groove are/is a taper groove, the taper groove is used to limit movement of the movable component in the first direction.

26. The voice coil motor according to any one of claims 20 to 25, wherein the voice coil motor further comprises an elastic member, the elastic member comprises a third connection portion, a fourth connection portion, and a cantilever located between the third connection portion and the fourth connection portion, the third connection portion is fastened to the fastening portion, and the fourth connection portion is fastened to the movable portion.

27. The voice coil motor according to claim 26, wherein there is a second preset distance in the second direction between a surface that is of the fastening portion and that is fastened to the third connection portion and a surface that is of the movable portion and that is fastened to the fourth connection portion, and the second preset distance is used by the elastic member to apply a second pre-pressure to the second fulcrum element and the third fulcrum element.

28. The voice coil motor according to claim 26 or 27, wherein the voice coil motor comprises two elastic elements;
the movable portion comprises a first support portion and a second support portion that are disposed opposite to each other in a third direction, and a third support portion configured to connect the first support portion and the second support portion, the third support portion is perpendicular to the second direction, and the third direction is perpendicular to the first direction and perpendicular to the second direction;
the fastening portion comprises a fourth side wall and a fifth side wall that are disposed opposite to each other in the third direction, and a third side wall configured to connect the fourth side wall and the fifth side wall, the third side wall is perpendicular to the second direction, the fourth side wall is located on a side that is of the second support portion and that is away from the first support portion, and the fifth side wall is located on a side that is of the first support portion and that is away from the second support portion; and
an end face that is of the fourth side wall and that is away from the third side wall in the second direction is connected to an end face that is of the second support portion and that is away from the third support portion in the second direction through one of the two elastic elements, and an end face that is of the fifth side wall and that is away from the third side wall in the second direction is connected to an end face that is of the first support portion and that is away from the third support portion in the second direction through the other of the two elastic elements.

29. The voice coil motor according to any one of claims 26 to 28, wherein
a first groove located between the second groove and the third groove is provided on the second component, and the first groove is used to accommodate a magnetic element; and
a magnetic conductive member located between the second fulcrum element and the third fulcrum element is disposed on the first component, and a magnetic force between the magnetic conductive member and the magnetic element is used to apply a third pre-pressure to the second fulcrum element and the third fulcrum element.

30. An optical image stabilization assembly, comprising an optical element and the voice coil motor according to any one of claims 1 to 29, wherein the optical element is fastened to the voice coil motor, the optical element is configured to adjust light incident in a first direction to be transmitted in a second direction, and the voice coil motor is configured to drive the optical element to rotate.

31. A compact camera module, comprising a lens group, an image sensor, and the optical image stabilization assembly according to claim 30, wherein the lens group is configured to: process light incident from the optical element and then project processed light onto the image sensor.

32. An electronic device, comprising a gyroscope, a processing unit, and the compact camera module according to claim 31, wherein the gyroscope is configured to: collect shake information of the electronic device, and send the shake information to the processing unit, and the processing unit is configured to control, based on the shake information, the voice coil motor to drive the optical element to perform shake compensation.
